(19) Europäisches Patentamt
European Patent Office
Office européen des brevets

(11) **EP 3 262 387 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **16706625.7**

(22) Anmeldetag: **26.02.2016**

(51) Int Cl.:
***G01H 9/00*** *(2006.01)*      ***G01C 19/72*** *(2006.01)*

(86) Internationale Anmeldenummer:
**PCT/EP2016/054082**

(87) Internationale Veröffentlichungsnummer:
**WO 2016/135289 (01.09.2016 Gazette 2016/35)**

(54) **SENSORVORRICHTUNG FÜR REIFEN**

SENSOR DEVICE FOR TIRES

DISPOSITIF DE DÉTECTION POUR PNEUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2015 EP 15157062**

(43) Veröffentlichungstag der Anmeldung:
**03.01.2018 Patentblatt 2018/01**

(73) Patentinhaber:
• **Schopohl, Nils**
  **72766 Reutlingen (DE)**
• **Lohfink, Christoph**
  **36137 Grossenlueder/Mues (DE)**

(72) Erfinder:
• **Schopohl, Nils**
  **72766 Reutlingen (DE)**
• **Lohfink, Christoph**
  **36137 Grossenlueder/Mues (DE)**

(74) Vertreter: **Otten, Roth, Dobler & Partner mbB Patentanwälte**
**Großtobeler Straße 39**
**88276 Berg / Ravensburg (DE)**

(56) Entgegenhaltungen:
**EP-A1- 1 403 613      WO-A2-2014/039128**
**CN-A- 101 706 997      JP-B2- 3 545 798**
**US-A1- 2010 067 018      US-B2- 7 355 718**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Sensorvorrichtung zur Erfassung von mechanischen Schwingungen bzw. sonstigen mechanischen Einwirkungen auf ein Untersuchungsobjekt, nämlich ein Fahrzeug bzw. ein Bauteil eines Fahrzeugs, nämlich einen Reifen.

Stand der Technik

Die Reifen bilden einen der sicherheitsrelevantesten Bestandteile eines Fahrzeugs. Obgleich im Automobilbereich eine Vielzahl unterschiedlicher Sensoren und Assistenzsysteme existieren, hat es sich als besonders schwierig und äußerst aufwendig herausgestellt, Eigenschaften der Reifen während der Fahrt erfassen zu können, insbesondere, weil Messungen dort unter extrem schwierigen Bedingungen ablaufen müssen. Daher stehen viele Daten nur bei werksinternen Tests und bei Versuchen, nicht aber im täglichen Alltag zur Verfügung.

Aufgabe der Erfindung ist es, eine verbesserte Sensorik, insbesondere zur Erfassung mechanischer Schwingungen und Einwirkungen an Reifen eines Fahrzeugs, bereitstellen zu können.

Die Aufgabe wird durch Merkmale des Anspruchs 1 gelöst, sowie des Weiteren durch eine Detektionsvorrichtung nach Anspruch 9, ein Untersuchungsobjekt nach Anspruch 12 bzw. durch ein Verfahren nach Anspruch 15. Durch die in den Unteransprüchen genannten Maßnahmen sind vorteilhafte Ausführungen und Weiterbildungen der Erfindung möglich.

Dementsprechend umfasst die erfindungsgemäße Sensorvorrichtung ein faseroptisches Interferometer. Der klassische Aufbau eines Interferometers, insbesondere eines Sagnac-Interferometers, erfolgt über Spiegel, wobei das Licht in der Regel durch die Luft propagiert. Zur einfachen Unterbringung des Interferometers in einem mechanischen Belastungen ausgesetzten Fahrzeugteil, insbesondere in einem Reifen wird zumindest der messrelevante Teil des Lichtpfads durch eine optische Faser gebildet. Das Licht wird in den Randbereichen der Faser reflektiert. Das faseroptische Interferometer kann sodann zum Beispiel als Faserkreisel (Gyroskop) arbeiten bzw. als Interferometer nach dem Sagnac-Prinzip, d. h., dass zwei oder mehr Lichtsignale auf dem gleichen optischen Pfad, allerdings in entgegengesetzter Richtung propagieren und nach Durchlaufen der Strecke überlagert werden, sodass die Lichtsignale interferieren können.

Der optische Pfad ist dabei als Schlaufe bzw. als geschlossene Kurve ausgebildet. Auf diese Weise kann der optische Pfad insbesondere um die Drehachse eines Reifens verlaufen. Durch die Drehung wird bewirkt, dass sich die optische Weglänge, die das Signal durchläuft, das in Richtung der Drehung (des Reifens) propagiert, von der des Lichtsignals, das in entgegengesetzter Richtung propagiert, unterscheidet. Das sich ergebende Interferenzsignal bei Überlagerung der Lichtsignale nach Durchlaufen der Schleife(n) gibt also Auskunft über die Phasenverschiebung. Hieraus kann wiederum unter anderem eine Information über die Drehbewegung, vor allem die Winkelgeschwindigkeit bestimmt werden. Das Interferometer kann aber nicht nur durch die reine Drehbewegung beeinflusst werden, sondern auch durch andere mechanische Einwirkungen, die somit grundsätzlich durch die erfindungsgemäße Sensorvorrichtung ebenfalls detektiert werden können.

Der optische Pfad verläuft dabei innerhalb wenigstens einer optischen Faser. Aufgrund des analogen Aufbaus kann die Sensorvorrichtung grundsätzlich bei einer Ausführungsform auch als Faserring-Resonator verwendet werden, wobei in diesem Fall am Ende bzw. an den Enden der optischen Faser bzw. der optischen Fasern Reflexionen des Lichts auftreten können, sodass sich im Inneren stehende Wellen ausbilden. Diese sind wiederum abhängig von der optischen Weglänge des Resonators.

In vorteilhafter Weise können aufgrund der Empfindlichkeit der vorgeschlagenen Messvorrichtung bereits sehr schwache mechanische Einwirkungen festgestellt werden. Neben der Messung der Winkelgeschwindigkeit sind alle mechanischen Einwirkungen grundsätzlich messbar, die eine Änderung der optischen Weglänge bzw. eine zeitliche Veränderung des Interferenzsignals hervorrufen. Durch die Erfindung wird somit ermöglicht, Eigenschaften eines Reifens und Fahrbedingungen im täglichen Alltag während der Fahrt detektieren und nutzen zu können, die zuvor nicht oder nur bedingt zur Verfügung standen.

Oftmals müssen Interferometer bzw. Resonatoren mechanisch in besonderer Weise stabilisiert werden, wenn sie im Laborbetrieb eingesetzt werden, um störende Einflüsse abzuschirmen. Diese Empfindlichkeit kann in überraschender Weise bei der Erfindung gerade ausgenutzt werden, derartige mechanische Einwirkungen auf Reifen bestimmen zu können.

Die Sensorvorrichtung ist als intrinsischer Sensor ausgebildet, der insbesondere im Untersuchungsobjekt eingebettet oder zumindest am Untersuchungsobjekt angebracht ist. Wird das Untersuchungsobjekt somit mechanischen Einflüssen unterworfen, insbesondere in Rotation versetzt, so kann der zu durchlaufende optische Pfad unmittelbar zusammen mit dem Untersuchungsobjekt durch die mechanischen Einwirkungen beeinflusst werden. Dreht sich beispielsweise das Untersuchungsobjekt, wird auch der entsprechende optische Pfad mitbewegt. Auf diese Weise kann erreicht werden, dass zum einen eine Echtzeitmessung erfolgen kann. Zum anderen kann eine besonders genaue Messung erfolgen, weil die mechanische Einwirkung auf das Untersuchungsobjekt unmittelbar auch auf das Interferometer einwirkt.

Die erfindungsgemäße Sensorvorrichtung bietet grundsätzlich die Möglichkeit, dass die Sicherheit beim Fahren erhöht werden kann. Durch die erfindungsgemäße Sensorvorrichtung können detaillierte Parameter über den Reifen, insbesondere über dessen Eigenschaften, Rollverhalten, dessen Temperatur und Abnutzung in Echtzeit während der Fahrt gewonnen werden und können somit unmittelbar zur Steuerung des Fahrzeuges herangezogen werden. Insbesondere dann, wenn der Reifen einen kritischen Zustand erreicht, beispielsweise in Folge hoher Abnutzung kann dies unmittelbar mitgeteilt werden. Aber auch dann, wenn der Zustand des Reifens und des Fahrzeuges technisch einwandfrei zu beurteilen sind, können die mechanischen Einwirkungen auf den Reifen, wie zum Beispiel Stöße, aber auch zum Beispiel Schlupf bei glatten Fahrbahnverhältnissen, festgestellt und bei der Steuerung des Fahrzeuges berücksichtigt werden. Dies ist besonders wichtig, weil einzelne dieser Parameter, seien es Reifen- oder Fahrzeugparameter oder seien es Parameter über die Fahrbedingungen auf der Straße, nicht immer selbstständig vom Fahrer festgestellt werden können, oder aber erst dann, wenn es zu spät ist, weil sich diese bereits nachteilig auf die Fahrt ausgeübt haben (zum Beispiel, wenn das Fahrzeug ins Rutschen gerät oder ein Reifen im kritischen Zustand bereits geplatzt ist).

Bei einer Weiterbildung der Erfindung kann die optische Faser bzw. können die optischen Fasern so angeordnet sein, dass sie in oder an der Mantelfläche des Reifens angebracht sind, sodass sie im Wesentlichen die gesamte Fläche des Reifens um die Drehachse herum umgeben bzw. einschließen. Dies besitzt auch den Vorteil, dass mechanische Einwirkungen auf den Reifen somit auch mechanische Einwirkungen auf die optische Faser bedeuten können. Insbesondere kann die Faser unterhalb der Lauffläche eines Reifens angebracht sei, sodass mechanische Einwirkungen im Kontakt mit der Straße auch auf die Faser einwirken.

Um die Weglänge vergrößern zu können, kann die optische Faser auch einen mäandrierenden Verlauf aufweisen, also seitlich bzw. senkrecht zur Ebene, in der die von der wenigstens einen optischen Faser umgebende Fläche liegt, ausgelenkt sein.

Zur Beibehaltung ihrer grundsätzlichen Form und Anordnung kann / können die optische Faser bzw. die optischen Fasern an diskreten Stellen befestigt sein. Auf diese Weise kann auch verhindert werden, dass Neukalibrierungen der Sensorvorrichtung vorgenommen werden müssen, weil die geometrische Anordnung sich bei ständiger Belastung mit der Zeit ändert. Dadurch, dass eine Befestigung an diskreten Stellen erfolgt, kann in vorteilhafter Weise auch erreicht werden, dass bei mechanischen Deformationen des Untersuchungsobjektes, beispielsweise im Bereich der Auflagefläche des Rades, sich der optische Pfad bzw. die optische Pfadlänge zwischen einzelnen diskreten Stellen ändert, wenn diese Punkte, z. B. bei einer Drehung eines auf der Straße aufliegenden Reifens in den Bereich gelangen, in dem die mechanische Deformation auftritt. Die Deformation bewirkt eine zeitliche Änderung der Lage der optischen Faser bei der Drehung, was somit wieder zu einem optischen Wegunterschied der entgegengesetzt propagierenden Lichtsignale führt. Auf diese Weise können, wie bereits beschrieben, nicht nur Größen wie die Winkelgeschwindigkeit des rotierenden Reifens bestimmt werden, sondern z. B. auch Unwuchten oder Abrieb.

Damit das Interferenzsignal möglichst deutlich ausfällt, ist es insbesondere vorteilhaft, wenn die mechanische Einwirkung unmittelbar eine Änderung der optischen Weglänge, insbesondere zwischen den entgegengesetzt propagierenden Lichtsignalen mit sich bringt. Dies ist z. B. dann der Fall, wenn die optische Faser um die Drehachse herum angeordnet ist und die Lichtsignale zueinander in entgegengesetzter Richtung, d.h. einmal in Drehrichtung und einmal entgegengesetzt, propagieren können. Bezüglich des grundsätzlichen Aufbaus kann auch ein Resonator ausgebildet werden.

Darüber hinaus kann auch eine Polarisationsänderung infolge von Transmissions- bzw. Reflexionsänderungen der optischen Faser, welche durch mechanische Einwirkungen hervorgerufen werden, auftreten, die wiederum charakteristisch für diese zu bestimmenden Parameter sind. Durch diese zusätzlichen Möglichkeiten können besonders umfangreiche Informationen über die Drehung eines Reifens, dessen Eigenschaften und auch über die Fahrbahneigenschaften gewonnen werden.

Eine gute Strahlqualität und eine effektive Verstärkung des Lichts können erreicht werden, wenn z. B. durch Verwendung dotierter Glasfasern etwa ein Faserlaser ausgebildet wird. Entsprechend zeichnet sich eine Detektionsvorrichtung gemäß der Erfindung dadurch aus, dass sie mit einer erfindungsgemäßen Sensorvorrichtung bzw. mit einer Sensorvorrichtung gemäß einem der Ausführungsbeispiele der Erfindung ausgestattet ist. Zudem kann eine Detektionsvorrichtung weitere Baueinheiten umfassen, zum Beispiel eine Lichtquelle, den Empfänger zum Empfangen der Lichtsignale, eine Auswerte- bzw. Elektronikeinheit zur Aufbereitung bzw. Auswertung der detektierten Signale usw. Hierdurch können im Wesentlichen die gleichen Vorteile, wie sie bereits aufgezählt wurden, erreicht werden.

Da das Untersuchungsobjekt, nämlich der Reifen, mechanischen Einwirkungen ausgesetzt ist, insbesondere einer Rotationsbewegung, ist es technisch mitunter schwierig, die gesamte Detektionsvorrichtung, insbesondere einschließlich einer Lichtquelle und einer Auswerteelektronik in das entsprechende Untersuchungsobjekt unterzubringen. Folglich ist es vorteilhaft, einen Teil der Detektionsvorrichtung am Ort der Messung direkt unterzubringen, wo dieser Teil zum Beispiel rotieren kann, den anderen Teil aber in einem nichtrotierenden Teil (gegenüber der Rotation statischen Teil), gegebenenfalls auch geschützt unterzubringen. Bei einer besonders bevorzugten Weiterbildung der Erfindung kann als Kopplungsvorrichtung zum Ein- bzw. Auskoppeln der elektromagnetischen Wellen, die zur Interferenz genutzt werden, vor allem ein optischer Drehüberträger (Engl.: Rotary joint) eingesetzt werden. Hierdurch wird somit die Möglichkeit geboten, dass z. B. auch trotz einer schnellen Drehbewegung das Licht dennoch in die optischen Fasern ein- bzw. ausgekoppelt werden kann. Durch diese Maßnahme kann die Vorrichtung nicht nur vergleichsweise günstig gefertigt werden, sondern es wird insbesondere der fertigungstechnische Aufwand verringert und ein besonders hohes Maß an Genauigkeit ermöglicht.

Während die Sensorvorrichtung z. B. vollständig den mechanischen Bewegungen, insbesondere den Drehbewegungen unterworfen sein kann, kann die Detektionsvorrichtung beides umfassen, den (im Falle eines Reifens) rotierenden Teil der Sensorvorrichtung, der mechanischen Bewegungen unterworfen ist, und einen bezüglich des Reifens statischen Teil, der wiederum Bauteile umfasst, die gegebenenfalls keinen Belastungen ausgesetzt werden sollen. Im Folgenden werden weitere Beispiele für Bauteile angegeben, die von der Detektionsvorrichtung umfasst werden können:

- eine Lichtquelle, insbesondere ein Laser zur Erzeugung des Detektionslichts und/oder eine Lichtquelle in Form einer Superlumineszenz-Diode;

- einen Polarisator zur Polarisation des Detektionslichts,

- einen Phasenmodulator zum Modulieren der Phase des Detektionslichtes,

- ein optischer Detektor zur Detektion von Licht.

Eine Lichtquelle, etwa in Form einer Superlumineszenz-Diode (Abkürzung: SLD) bietet für faseroptische Ringinterferometer gegenüber Laserdioden den Vorteil der geringeren Kohärenz bei gleichzeitig gut in die Faser einkoppelbarer Leistung. Gegegenüber optischen Leuchtdioden weisen Superlumineszenz-Dioden in der Regel eine höhere optische Leistung auf. Als Funktionsprinzip die verstärkte spontane Emission zugrunde. Die Diode ist wie eine Halbleiter-Laserdiode aufgebaut, nur sind die Endflächen nicht reflektierend. In dem Chip entstehen durch spontane Emission Photonen, die bei einem Durchlauf bis zur Endfläche durch stimulierte Emission verstärkt werden. Die Breite des Spektrums ergibt sich aus dem Überlapp der Übergangswahrscheinlichkeit der spontanen Emission mit der Verstärkungsbandbreite. Oft verwendete SLD, wie auch andere Halbleiter-Dioden, bestehen aus einem InGaAsP / InP-Halbleiter, welcher bei einer Mittelwellenlänge von 1545 nm emittiert.

Derartige Bauteile können z. B. in dem Teil der Detektionsvorrichtung untergebracht werden, der keinen mechanischen Einwirkungen ausgesetzt ist (z.B. der gegenüber der Rotation des Reifens statische Teil), während der übrige Teil als Sensorvorrichtung z. B. im Untersuchungsobjekt (Reifen) untergebracht werden kann. Die Sensorvorrichtung kann grundsätzlich aber auch neben der optischen Faser weitere Bauteile umfassen, z.B. eine Lichtquelle, insbesondere, wenn die Umgebungsbedingungen es erlauben, diese in den Teil unterzubringen, der mechanischen Belastungen ausgesetzt ist. Die Kopplungsvorrichtung kann den Übergang zwischen rotierendem und statischem Teil bilden. Auch der gegenüber der Rollbewegung, etwa des Reifens statische Teil führt dennoch bei der Bewegung des Fahrzeugs eine Translationsbewegung aus.

Außerdem zeichnet sich dementsprechend ein erfindungsgemäßes Untersuchungsobjekt, insbesondere ein Fahrzeugreifen dadurch aus, dass eine Sensorvorrichtung bzw. eine Detektionsvorrichtung gemäß der Erfindung bzw. gemäß einem der Ausführungsbeispiele vorgesehen ist. Das Untersuchungsobjekt kann als einzelnes Bauteil gegebenenfalls die Sensorvorrichtung beinhalten. Die optische Faser bzw. das (Ring-) Interferometer ist zum Beispiel in den Reifen eingebettet. Diese gesamte Einheit aus Untersuchungsobjekt einschließlich des Interferometers kann als solche sodann auch vertrieben werden.

Bei der Ausführungsvariante der Erfindung kann es sich insbesondere anbieten, das Untersuchungsobjekt und die im Zusammenhang mit dem Untersuchungsobjekt unterzubringende optische Faser so anzuordnen, dass diese teilweise oder vollständig in einer Rotationsebene liegt, die senkrecht zur Drehachse steht. Ist die optische Faser in Form von ebenen Schlaufen angeordnet, so bilden diese eine Ebene, nämlich die Rotationsebene, die senkrecht oder im Wesentlichen senkrecht zur Drehachse ausgerichtet sein kann. Auf diese Weise kann in besonders vorteilhafter Form die Drehung zu einer Änderung der optischen Weglänge für ein hindurchlaufendes Lichtsignal führen, die somit mittels des Interferometers messbar sind. Darüber hinaus kann bei einer Ausführungsform der Erfindung die Drehachse die von der Faser umgebende Fläche ebenfalls durchstoßen, um ein besonders gutes Signal detektieren zu können. Ist die optische Faser z. B. so angeordnet, dass diese einen mäandrierenden Verlauf aufweist, kann die Rotationsebene so definiert werden, dass die Auslenkungen im mäandrierenden Verlauf um eine gedachte Linie herum erfolgen, die wiederum innerhalb der Rotationsebene angeordnet ist. Die Ausbildung einer Auflagefläche des Reifens auf der Straße, eines Latsches, bewirkt eine Dehnung des elastischen Gummimaterials des Reifens. Ein mäandrierender Verlauf der Faser ermöglicht es, dass die Dehnung eine Streckung der geometrischen, mäandrierenden Faseranordnung bewirkt, sodass die bei Rotation eine Phasendifferenz zwischen den entgegengesetzt laufenden Lichtsignalen bewirkende Streck in diesem Bereich vergrößert werden kann. Die lokale Dehnung des Reifens wird also durch dieses Ausführungsbeispiel messbar.

Bei einer weiteren Ausführungsvariante der Erfindung kann die wenigstens eine optische Faser z. B. parallel zur Lauffläche, die grundsätzlich mit der Straße in Bewegung kommt, angeordnet werden, insbesondere innerhalb des Gürtelmaterials, sodass die Faser geschützt ist. Es bietet sich grundsätzlich an, die optische Faser im Bereich der Karkasse, die in der Regel aus Gewebeschichten, z. B. mehreren Lagen aus Kunstfasern besteht und daher besonders stabilisierend wirkt, anzuordnen. Auf diese Weise kann verhindert werden, dass die optische Faser Schaden durch die mechanische Belastung erleidet.

Ist ein optischer Drehüberträger vorgesehen, so kann dieser im Bereich der Drehachse angeordnet sein, da hier eine optimale Einkopplung bzw. Auskopplung des optischen Signals ermöglicht wird. Da die Drehachse in der Regel relativ schmal ausgebildet ist, sind auch die Wegstrecken auf den sich drehenden Außenmantel in der Regel relativ gering, sodass hier wenig Verzögerung beim Ein- oder Auskoppeln zu erwarten sind.

Die erfindungsgemäße Sensorvorrichtung und die erfindungsgemäße Detektionsvorrichtung ermöglichen es, Ausführungsbeispiele vorzusehen, bei denen die gewonnenen Messdaten weitergegeben und ausgewertet werden. Hierzu können zum Bespiel bestehende Assistenzsysteme in Fahrzeugen benutzt werden, wie beispielsweise APS, ESP oder dergleichen. Der Fahrer kann entsprechend mit Warnhinweisen versorgt werden, oder aber es kann unmittelbar durch die Fahrzeugsteuerung auf die Fahrt eingewirkt werden, zum Beispiel bei Bremsvorgängen oder in Form des Ausschaltens einer Vorrichtung zur Geschwindigkeitskontrolle usw.

Die erfindungsgemäße Sensorvorrichtung mit optischem Faserinterferometer zeichnet sich insbesondere auch dadurch aus, dass sie weitgehend unabhängig von störenden Umgebungseinflüssen betrieben werden kann. Die Propagation des Lichtes wird im Grunde nicht beeinflusst durch elektromagnetische Felder, die Motorraum durch die dort untergebrachte Elektrik beziehungsweise Elektronik hervorgerufen werden, aber auch nicht durch sonstige Einflüsse wie zum Beispiel hohe Luftfeuchte oder die Motortemperatur, da das Interferometer weitgehend abgeschirmt davon im Reifen untergebracht werden kann. Zudem können im Grunde sämtliche elektronischen Bauteile (z.B. Sensoren) im Zusammenhang mit dem Interferometer außerhalb des Bereichs untergebracht werden, wo die eigentlichen Messungen stattfinden und der somit durch vor allem mechanische Einflüsse (unter anderem Drehbewegung bei Reifen, Stöße usw.) Schädigungen an den Sensoren oder der Auswerteelektronik mit sich bringen könnte. Die optische Phase an sich ist einerseits, zum Beispiel bei Unterbringung im Reifen, geschützt und ummantelt, sie ist aber auch ohnehin in Bezug auf mechanische Einflüsse, die senkrecht zur Längsachse wirken relativ unempfindlich. Lichtquellen, Empfänger, Optiken zum Ein- oder Auskoppeln können hingegen in statischen Teilen untergebracht werden, die nicht direkt diesen mechanischen Einflüssen unterworfen sind und insbesondere nicht mitrotieren. Durch diese Aufteilung der Detektionsvorrichtung in einen statischen Teil und einen Teil, der den mechanischen Belastungen ausgesetzt ist, können also in vorteilhafterweise Beschädigungen vermieden werden. Auch kann der Aufwand, insbesondere beim Nachrüsten einer derartigen Sensorvorrichtung vergleichsweise gering ausfallen, weil lediglich robuste Teile in die mechanisch beanspruchten Bereiche installiert werden.

Zur Funktion nach dem Sagnac-Prinzip

Bei Ausführungsbeispielen der Erfindung kann vorzugsweise der Sagnac-Effekt ausgenutzt werden. Zur Beschreibung des Sagnac-Effekts wird von einem Grundaufbau ausgegangen, dass das Licht aus seinem optischen Weg über Spiegel eine "Schleife" beziehungsweise einen geschlossenen optischen Weg durchläuft. Das Licht kann dabei in zwei Signale, die entgegengesetzt propagieren, aufgeteilt werden. Bei dieser Anordnung wird der optische Weg bzw. das Interferometer in Rotation versetzt, wobei die Drehachse durch die Fläche verläuft, die von dem Lichtweg eingeschlossen wird, sodass für eines der Lichtsignale sich die Spiegel vom Licht weg bewegen und, bei dem entgegengesetzt propagierenden Licht, auf das Licht zu. Hieraus resultiert eine Phasendifferenz, wenn die beiden Lichtstrahlen wieder zusammengefügt werden und interferieren können. Anstelle von Spiegeln kann das Licht grundsätzlich aber auch in einer optischen Faser propagieren, wobei es einen wenden der optischen Faser reflektiert werden kann. Somit treten hier ähnliche Effekte auf. Um die Wirkung des Sagnac-Effektes noch zu verstärken, können mehrere geschlossene Schleifen an optischen Fasern eingesetzt werden, sodass das Licht insgesamt einen größeren Weg zurücklegen muss und länger dem die Phasendifferenz generierenden Einfluss unterworfen ist. Sind alle diese Schlaufen entsprechend der gleichen Rotation unterworfen, so vergrößert sich die entstehende Phasenverschiebung.

Zum Aufbau eines Reifens und zur Unterbringung im Reifen:

Bei einer besonders bevorzugten Weiterbildung der Erfindung können die optischen Fasern innerhalb der Struktur eines Reifens untergebracht werden. Entsprechende Autoreifen können zum Beispiel wie folgt ausgebildet sein: Sie besitzen einen schlauchlosen Mantel, der außen eine Lauffläche aufweist, in die regelmäßig ein Profil eingearbeitet ist, wobei die Lauffläche auch mit der Straße in Berührung kommt. Unterhalb der Lauffläche befindet sich in der Regel ein Gürtel aus verschiedenen Geweben. In diesem Bereich befindet sich auch die sogenannte Karkasse, die meist aus einem Kunststoffgewebe gefertigt ist. In diesem Gürtel können aber auch Stahlgewebe sowie weitere Gewebe, zum Beispiel aus Nylon eingebettet sein. Nach Innen hin ist dieser Gürtel isoliert. Nach außen hin wird die Karkasse durch die Seitenwand geschützt.

Die Karkasse selbst wiederum bildet das tragende Gerüst des Reifens. Durch die hoch belastbare Gewebestruktur eignet sich gerade die Karkasse auch besonders gut, um optische Fasern dort stabil und mit ausreichendem Raum unterbringen zu können. Im Wulstbereich liegt der Reifen an der Felge an. Auch hier können Stahldrähte vorgesehen sein, um einen sicheren Halt an der Felge zu ermöglichen.

Steht das Fahrzeug mit seinen Reifen auf der Straße, wird der Reifen aufgrund des Gewichtes des Fahrzeuges am Boden leicht eingedrückt, sodass der Reifen über eine Fläche auf der Fahrbahn steht. Nach dem sogenannten Brush-Modell kann entlang der Fahrrichtung einem Teilbereich dieser Auflagefläche, die insgesamt als Latsch bezeichnet wird, ein Haften und dem anderen Teilbereich ein Gleiten zugeordnet werden. Gerade dieser Bereich ist für ein Ausführungsbeispiel, bei dem optische Fasern in einen Reifen integriert sind, von besonderer Bedeutung, weil die optische Faser im unbelasteten Reifen auf einem Kreis angeordnet ist, der jedoch im belasteten Zustand des Reifens im Bereich des Latsches "eingedellt" wird, sodass bei der Rotation des Interferometers dort eine (andere) Phasenverschiebungen auftritt. Beim Abrollen des belasteten Reifens treten also zeitliche Signaländerungen auf, weil durch die sich zeitlich ändernde geometrische Anordnung die optische Weglänge der Lichtsignale sich ändert. Dadurch ändert sich das Interferenzsignal, was entsprechend detektiert werden kann. Zusätzlich wirken auch andere mechanische Stöße und Einwirkungen, Unebenheiten des Reifens usw. auf die Faser ein, so dass diese Signale zur Verfügung stehen und über die Bewegung des Reifen Auskunft geben. Werden beim Ausführungsbeispiel der Erfindung optische Fasern eingesetzt, zeichnen die sich insbesondere dadurch aus, dass sie sehr robust in Bezug auf mechanische Belastungen sind. Darüber hinaus können sie extrem dünn ausgebildet werden und in Bezug auf Einwirkungen senkrecht zur Längsachse flexibel sein. Die Implementierung einer Faser in den Reifen bedeutet in vorteilhafter Weise aber auch keine merkliche Gewichtsänderung. Ferner kann die optische Faser ohne größere Umbaumaßnahmen zum Beispiel in einem Reifen untergebracht werden, ohne merklichen Platz zu beanspruchen und ohne, dass der Reifen selbst baulich in besonderen Maße verändert werden müsste.

Physikalische Betrachtung der erfindungsgemäßen Sensorvorrichtung bzw. eines Ausführungsbeispiels:

Betrachtungen zur Kontaktmechanik von rollenden gummibereiften Rädern:

Reifen stellen die direkte Verbindung zwischen einem Fahrzeug und der Straße her. Beim ruhenden, unbelasteten pneumatischen Rad mit Radius $R^{(0)}$ wird dann bei Belastung die Position des Radmittelpunktes in vertikaler Richtung um die Strecke $\Delta r$ nach unten verkürzt bzw. "eingefedert". Zugleich bildet sich aus der ursprünglich quer zur Fahrbahn orientierten linienförmigen Kontaktzone des gummibereiften Rades ohne Last dann unter Last auf der Fahrbahn eine Reifenaufstandsfläche $S$ (auch Reifenlatsch genannt) mit endlich großer Ausdehnung $\boldsymbol{L}$ in Fahrtrichtung $\boldsymbol{e_x}$ aus. Da infolge der elastischen Verformung auch der Radumfang entsprechend verändert wird, gilt für den effektiven Radius $R^{(S)}$ des eingefederten Rades jetzt

$$R^{(S)} = R^{(0)} - \Delta r$$

Mit der Annahme $\Delta r \ll R^{(0)}$ folgt für die Ausdehnung $L$ des Latsch eines belasteten pneumatischen Fahrzeugreifens auf ebener Fahrbahn in Abhängigkeit von $R^{(0)}$ und von der Länge der Einfederung $\Delta r$ aufgrund einer elementaren geometrischen Betrachtung die Relation:

$$L \cong \sqrt{4R^{(0)}\Delta r}$$

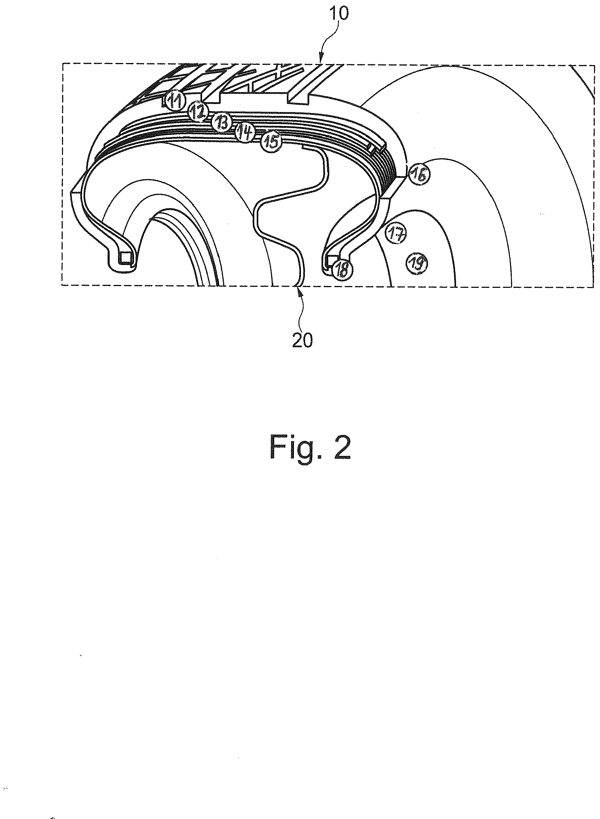

Da ein pneumatischer Reifen grundsätzlich nicht als starrer Körper zu beschreiben ist, werden mit dem übertragenen Drehmoment beim angetriebenem bzw. gebremsten Rad die in der Reifenaufstandsfläche befindlichen Profilsegmente des Reifens aufgrund der charakteristischen Elastizität eines Gummikörpers elastisch verformt (siehe Fig. 2). Je nach Beschaffenheit der Fahrbahn und des Reifenprofils kann die Reifenaufstandsfläche aus einzelnen nicht zusammenhängenden Flächensegmenten zusammengesetzt sein, z.B. bei Fahrt auf Kopfsteinpflaster, geschotterter Fahrbahn oder auf Waldwegen. Bei Fahrt auf Asphaltbeton und ebener Fahrbahn ist es eine gute Näherung, den Latsch als eine zusammenhängende Fläche zu betrachten. An allen Punkten der Reifenaufstandsfläche werden beim angetriebenen bzw. gebremsten Reifen senkrecht zur Fahrbahn Normalkräfte und tangential zur Fahrbahn Reibungskräfte übertragen. Zurückzuführen sind diese Kräfte auf die inhomogene (zeitlich veränderliche) Druckverteilung $p(x,y,t)$ über der Reifenaufstandsfläche sowie auf die Verteilung der elastischen (zeitlich veränderlichen) Flächenspannung $\tau(x,y,t) = \tau_x(x,y,t)e_x + \tau_y(x,y,t)e_y$ im Latsch. Die resultierende Normalkraft $F^{(N)}$ senkrecht zur Fahrbahn sowie die insgesamt wirkende Tangentialkraft $F^{(T)}$ sind dann als Integrale dieser Verteilungsfunktionen gegeben zu

$$F^{(N)} = F_z e_z,$$

$$F^{(T)} = F_x e_x + F_y e_y,$$

$$F_x = \int_S d^2r \, \tau_x(x,y,t),$$

$$F_y = \int_S d^2r \, \tau_y(x,y,t),$$

$$F_z = \int_S d^2r \, p(x,y,t).$$

Zugleich mit den Kräften $F^{(N)}$ und $F^{(T)}$ wirken resultierende Drehmomente auf den Latsch, die ihren Ursprung in der Asymmetrie der Verteilungsfunktionen $p(x,y)$ und $t_x(x,y)$, $t_y(x,y)$ haben:

$$M^{(N)} = M_x e_x + M_y e_y,$$

$$M^{(T)} = M_z e_z,$$

$$M_x = \int_S d^2r \, y \, p(x,y,t),$$

$$M_y = -\int_S d^2r \, x \, p(x,y,t),$$

$$M_z = \int_S d^2r \, [\, x\, \tau_y(x,y,t) - y\tau_x(x,y,t) \,].$$

Mit den Definitionen

$$a_x = \frac{\int_S d^2r \, x \, p(x,y,t)}{\int_S d^2r \, p(x,y,t)},$$

$$a_y = \frac{\int_S d^2r \, y \, p(x,y,t)}{\int_S d^2r \, p(x,y,t)}$$

als Komponenten eines effektiven Hebelarms folgt dann

$$M_x = a_y F_z,$$

$$M_y = -a_x F_z \, .$$

Das hier verwendete Koordinatensystem wird durch drei orthogonale Cartesische Einheitsvektoren $\{e_x, e_y, e_z\}$

aufgespannt und bezieht sich auf ein mitbewegtes (schleifendes) Koordinatensystem in der Reifenaufstandsfläche. Dabei zeigt $e_x$ in Längsrichtung des Reifenlatsch, $e_y$ zeigt in Querrichtung und $e_z$ ist senkrecht zur Fahrbahn orientiert.

Es ist eine praktische Konvention, den Ursprung $O$ des mitbewegten Koordinatensystems in einen Punkt auf der Fahrbahnebene zu legen, der im Spezialfall verschwindenden Sturzwinkels $\gamma = 0$ gerade der Projektion des Mittelpunkts $Q$ der Felge auf die Ebene der Fahrbahn entspricht. Zu Vergleichszwecken wird zudem ein fahrbahnfixiertes ruhendes Koordinatensystem herangezogen, dass durch drei orthogonale Cartesische Einheitsvektoren $\left\{ e_x^{(f)}, e_y^{(f)}, e_z^{(f)} \right\}$ aufgespannt ist. Die Orientierung der Radachse $j^{(R)}$ ist bei Geradeausfahrt in Richtung $e_x$ bei einem endlich großen Sturzwinkel $\gamma$ dann gegeben zu

$$j^{(R)} = \cos\gamma\, e_y + \sin\gamma\, e_z$$

Der Vektor der Winkelgeschwindigkeit der Felge,

$$\Omega = \Omega_x e_x + \Omega_y e_y + \Omega_z e_z,$$

ist allgemein bestimmt durch die zeitlichen Ableitungen von drei Winkeln: diese sind der Kurswinkel $\zeta$ (Drehung um vertikale Achse $e_z$), der Sturzwinkel $\gamma$ (Orientierung der Radachse), und der Drehwinkel $\theta^{(R)}$ um die Radachse :

$$\Omega = \dot{\gamma} e_x + \dot{\theta}^{(R)} j^{(R)} + \dot{\zeta}\, e_z = \dot{\gamma} e_x + \dot{\theta}^{(R)} \cos\gamma\, e_y + (\dot{\theta}^{(R)} \sin\gamma + \dot{\zeta}) e_z$$

Die Komponente der Winkelgeschwindigkeit $\Omega_z$ bezogen auf die Vertikalachse $e_z$ wird bei endlich großem Sturzwinkel $\gamma$ demnach ganz unabhängig sowohl von der Raddrehzahl $\dot{\theta}^{(R)}$ um die Radachse $j^{(R)}$ als auch von der Rate $\dot{\zeta}$ der Kursabweichung (sog. Gierrate) beeinflusst. Insgesamt sind die Komponenten von $\Omega$ gegeben zu

$$\Omega_x = \dot{\gamma},$$

$$\Omega_y = \dot{\theta}^{(R)} \cos\gamma,$$

$$\Omega_z = \dot{\theta}^{(R)} \sin\gamma + \dot{\zeta}.$$

Bei endlich großem Sturzwinkel $\gamma$ gilt dann für den Positionsvektor $R^{(O)}$ des Ursprungs $O$ des mitbewegten Koordinatensystems, ausgedrückt durch die Position $R^{(Q)}$ des Mittelpunkts $Q$ der Radfelge über der Fahrbahnebene bei angenommener Höhe $h$ der Radachse über der Fahrbahnebene, die Definition

$$R^{(O)} = R^{(Q)} + h \times \left( \tan\gamma\, e_y - e_z \right).$$

Offensichtlich liegt $R^{(O)}$ immer tangential in der Fahrbahnebene, $R^{(O)} \cdot e_z = 0$. Zudem ist $R^{(O)}$ so gewählt, dass der Differenzvektor $R^{(O)} - R^{(Q)}$ in jedem Augenblick orthogonal zur Drehachse $j^{(R)}$ orientiert ist:

$$\left( R^{(O)} - R^{(Q)} \right) \cdot j^{(R)} = h \times \left( \tan\gamma\, e_y - e_z \right)\left( \cos\gamma\, e_y + \sin\gamma\, e_z \right) \equiv 0$$

Der Sturzwinkel $\gamma$, die Höhe $h$ des Mittelpunkts $Q$ der Radfelge über der Fahrbahnebene, auch die orthogonalen Einheitsvektoren $e_x$ und $e_y$, sind alle radindividuelle Funktionen der Zeit $t$. Dabei gilt für endlich große Gierrate $\dot{\zeta} \neq 0$:

$$\frac{d}{dt} e_y = -\dot{\zeta}\, e_x$$

Die zeitliche Ableitung der Vektoren $\boldsymbol{R}^{(O)}$ und $\boldsymbol{R}^{(Q)}$ bestimmt somit den Geschwindigkeitsunter-schied der Punkte $O$ und $Q$ zu

$$\boldsymbol{V}^{(O)} = \boldsymbol{V}^{(Q)} - \left(\dot{\zeta} \times h \times \tan\gamma\right)\boldsymbol{e}_x + \left(\dot{h} \times \tan\gamma + h \times \frac{\dot{\gamma}}{\cos^2\gamma}\right)\boldsymbol{e}_y - \dot{h}\,\boldsymbol{e}_z$$

Da die vertikale Komponente des Geschwindigkeitsvektors $\boldsymbol{V}^{(Q)}$ ist immer gleich $\dot{h}\boldsymbol{e}_z$ ist, ist folglich $\boldsymbol{V}^{(O)}$ in jedem Augenblick tangential zur Fahrbahnebene orientiert, d.h. $\boldsymbol{V}^{(O)}\cdot\boldsymbol{e}_z = 0$.

Dem Gesagten ist zu entnehmen, dass der dynamische Zustand einer rollenden Felge als starrer Körper insgesamt durch sechs zeitabhängige skalare Funktionen der Zeit beschrieben ist, nämlich drei zur Charakterisierung der Freiheitsgrade für Drehungen und drei zur Beschreibung der Freiheitsgrade für Translationen:

- $\gamma$: Sturzwinkel
- $\Omega^{(R)}$: Radwinkelgeschwindigkeit um Radachse $\boldsymbol{j}^{(R)}$ ; $\Omega^{(R)}\equiv\dot{\theta}^{(R)}$
- $\Omega_z$: Winkelgeschwindigkeit um vertikale Achse $\boldsymbol{e}_z$; $\Omega_z = \Omega^{(R)}\sin\gamma + \dot{\zeta}$
- $V_x^{(O)}$: longitudinale Komponente der Geschwindigkeit des Punktes O auf der Fahrbahn
- $V_y^{(O)}$: Querkomponente der Geschwindigkeit des Punktes O auf der Fahrbahn
- $h$ : Höhe des Mittelpunkts Q der Radfelge über der Fahrbahnebene.

Im gummibereiften Rad werden diese sechs Freiheitsgrade der Felge durch die in der Radaufstandsfläche wirkenden Kräfte und Drehmomente untereinander zu einem System gekoppelter Differentialgleichungen verknüpft, welches dann z.B. als Anfangswertproblem zu lösen ist.

Eine erhebliche Vereinfachung des dynamischen Problems ergibt sich im stationären Zustand des rollenden Rades, also für den Fall, dass das Rad weder angetrieben noch gebremst ist, so dass die auf die Radaufstandsfläche wirkenden Kräfte und Drehmomente alle als zeitlich langsam veränderlich bzw. als konstant angesehen werden dürfen. Die betreffenden Differentialgleichungen reduzieren sich dann auf algebraische Gleichungen für die betreffenden Stationaritätsbedingungen.

Für gummibereifte Räder ist es nun eine experimentelle Tatsache, dass die im Reifenlatsch wirkenden Kräfte und Drehmomente nicht gesondert von der Winkelgeschwindigkeit $\Omega_z$ um die vertikale Fahrzeugachse, und auch nicht von den Geschwindigkeitskomponenten $V_x^{(O)}$ und $V_y^{(O)}$ des Fahrzeugs über Grund abhängen. Über einen weiten Bereich sind die Kräfte und Drehmomente im stationär rollenden Rad bei gegebener Raddrehzahl $\Omega^{(R)} \neq 0$ tatsächlich nur von den Verhältnissen

$$\frac{\Omega_z}{\Omega^{(R)}},\ \frac{V_x^{(O)}}{\Omega^{(R)}},\ \frac{V_y^{(O)}}{\Omega^{(R)}}$$

abhängig.

Für einen Reifen im Zustand des stationären Rollens gilt für die im Reifenlatsch wirkenden Kräfte und Drehmomente

$$F_x = F_x\left(h, \gamma, \frac{\Omega_z}{\Omega^{(R)}}, \frac{V_x^{(O)}}{\Omega^{(R)}}, \frac{V_y^{(O)}}{\Omega^{(R)}}\right) = 0,$$

$$F_y = F_y\left(h, \gamma, \frac{\Omega_z}{\Omega^{(R)}}, \frac{V_x^{(O)}}{\Omega^{(R)}}, \frac{V_y^{(O)}}{\Omega^{(R)}}\right) = 0,$$

$$M_z = M_z\left(h, \gamma, \frac{\Omega_z}{\Omega^{(R)}}, \frac{V_x^{(O)}}{\Omega^{(R)}}, \frac{V_y^{(O)}}{\Omega^{(R)}}\right) = 0.$$

Dies sind drei simultane implizite algebraische Gleichungen zur Charakterisierung des stationär rollenden Rades. Diese Forderungen sind äquivalent zu den folgenden drei Parametrisierungen:

$$V_x^{(O)} = \Omega^{(R)} \times R^{(R)}(h,\gamma) + \dot{\zeta} \times c^{(R)}(h,\gamma),$$

$$V_y^{(O)} - \dot{\gamma} \times \rho^{(R)}(h,\gamma),$$

$$\Omega_z = \Omega^{(R)} \sin\gamma \times \varepsilon^{(R)}(h,\gamma).$$

Die radindividuellen Längen $R^{(R)}(h,\gamma)$ und $\rho^{(R)}(h,\gamma)$ sowie die Länge $c^{(R)}(h,\gamma)$ sind anschaulich, wenn man sich den Reifen als rollenden Körper in der geometrischen Gestalt eines ringförmigen Torus mit großem Radius $R^{(R)}$ und kleinem Radius $\rho^{(R)}$ modelliert vorstellt. Bei einem Sturzwinkel $\gamma \neq 0$ ist der Kontaktpunktes $C$ mit der Fahrbahnebene gegenüber dem Punkt $O$ in negativer Richtung $-\mathbf{e_y}$ um die Länge $c^{(R)}(h,\gamma)$ verschoben. Die dimensionslose Funktion $\varepsilon^{(R)}(h,\gamma)$ dient in dem Fall dazu, für das stationär rollende gummibereifte Rad den Effekt des Schräglaufs zu reduzieren.

Elementare geometrische Überlegungen ergeben für den *starren* Torus als Modell des stationär rollenden Reifens den Zusammenhang:

$$c^{(R)}(h,\gamma) = -\rho^{(R)}(h,\gamma)\tan\gamma,$$

$$R^{(R)}(h,\gamma) = R^{(0)} - \rho^{(R)}(h,\gamma)(1 - \cos\gamma),$$

$$\varepsilon^{(R)}(h,\gamma) \equiv 0 \quad .$$

Für $\gamma = 0$ bei Geradeausfahrt auf ebener Fahrbahn ist natürlich der Kontaktpunkt $C$ mit der Position des Punktes $O$ identisch.

Diese Relationen legen es nahe, anstelle der Geschwindigkeit

$$\mathbf{V}^{(O)} \text{ in } \mathbf{V}^{(O)} = \mathbf{V}^{(Q)} - \left(\dot{\zeta} \times h \times \tan\gamma\right)\mathbf{e_x} + \left(\dot{h} \times \tan\gamma + h \times \frac{\dot{\gamma}}{\cos^2\gamma}\right)\mathbf{e_y} - \dot{h}\,\mathbf{e_z}$$

besser die Rollgeschwindigkeit $\mathbf{V}^{(C)}$ am Kontaktpunkt $C$ mit der Fahrbahnebene als relevante Variable zu betrachten

$$V_x^{(C)} = V_x^{(O)} - \dot{\zeta} \times c^{(R)} = \Omega^{(R)} \times R^{(R)},$$

$$V_y^{(C)} = V_y^{(O)} = \dot{\gamma} \times \rho^{(R)}.$$

Das schräg laufende Rad mit $\gamma \neq 0$ ist im stationären Zustand gemäß dadurch gekennzeichnet, dass es beim Abrollen nicht geradeaus, sondern auf einem (großen) Kreis mit Radius $K^{(R)}$ umläuft, wobei dann gilt

$$V_x^{(C)} - \Omega^{(R)} \times R^{(R)} - -\dot{\zeta} \times K^{(R)}$$

Aufgelöst nach $K^{(R)}$ ergibt das für den betreffenden Kreisradius

$$K^{(R)} = \frac{R^{(R)}}{(1-s^{(R)})\sin\gamma}$$

Rollt ein gummibereiftes Rad jetzt nicht stationär, sondern wird es angetrieben bzw. gebremst, so bewegt sich infolge elastischer Verformung der Kontaktpunkt $C$ in der Reifenaufstandsfläche nun nicht mit der Geschwindigkeit $V^{(C)}$ sondern mit einer effektiven Geschwindigkeit

$$V^{(eff)} = V_x^{(eff)} e_x + V_y^{(eff)} e_{y'},$$

$$V_x^{(eff)} = V_x^{(O)} - \dot{\zeta} \times c^{(R)} \quad,$$

$$V_y^{(eff)} = V_y^{(O)} + \dot{c}^{(R)}$$

Der Unterschied der Geschwindigkeiten $V^{(s)} = V^{(eff)} - V^{(C)}$ definiert die radindividuellen Schlupfparameter in Längs- und in Querrichtung.

Ein physikalisch begründetes Minimalmodell für den Schlupf gummibereifter Räder:

Elementare Grundlage der Kraftübertragung zwischen gummibereiften Rädern und Fahrbahn, z.B. bei Geradeausfahrt auf ebener Fahrbahn in Richtung $e_x$, ist das empirisch bestätigte Reibungsgesetz:

$$F_x = \mu_x F_z.$$

Hier ist $F_x$ die Komponente der wirkenden traktiven Kraft in tangentialer Fahrtrichtung $e_x$ des Fahrzeugs und $F_z$ ist der Betrag der Radlast auf ebener Fahrbahn, also beim ruhenden Fahrzeug die durch eine Masse M auf die Aufstandsfläche des Reifens ausgeübte Kraft im Schwerefeld der Erde.
Der Quotient der Beträge beider Kräfte ist $\mu_x$, der von der Beschaffenheit der Fahrbahn abhängige radindividuelle Längsreibwert zwischen Reifen und Fahrbahn, wenn der Reifen in Richtung $e_x$ abrollt. Bei der Reibung eines Gummikörpers mit festem Untergrund ist der Reibwert $\mu_x$ im Gegensatz zum Coulombschen Reibungsgesetz keine Konstante, sondern hängt noch von der Gleitgeschwindigkeit ab.
Die Gleichung $F_x = \mu_x F_z$ besagt, dass die übertragbare Zugkraftkomponente $F_x$ beim belasteten rollenden Rad auf ebener Fahrbahn proportional zur vertikalen Kraftkomponente $F_z$ auf die Reifenaufstandsfläche ist. Es gilt dann für das angetriebene bzw. gebremste Rad mit Sturzwinkel $\gamma = 0$, d.h. Drehachse

$$j^{(R)} = e_{y'}$$

der Drehimpulssatz

$$\frac{d}{dt}\left(J^{(R)} \cdot \Omega^{(R)}\right) = T^{(A)} + T^{(B)} + T^{(RW)} - R^{(dyn)} F_x$$

Hier ist $T^{(A)}$ das Drehmoment für Antrieb der Felge, entsprechend ist $T^{(B)}$ das entgegen wirkende Drehmoment zum Bremsen. Das kleine und dem Antrieb ebenfalls entgegen wirkende Drehmoment des Rollwiderstands $T^{(RW)}$ ist wichtig bei der Ermittlung des Kraftstoffverbrauchs, aber wird für fahrdynamische Überlegungen (meist) vernachlässigt. Der Term $R^{dyn)}F_x$ schließlich beschreibt den Beitrag der Komponente $F_x$ der traktiven Reibkraft im Zentrum der Reifenaufstandsfläche zum auf den Reifen wirkenden Drehmoment. Als wichtigste radindividuelle Parameter sind neben dem Trägheitsmoment $J^{(R)}$ des Rades vor allem zu nennen die Winkelgeschwindigkeit der Radeigendrehung $\Omega^{(R)}$ sowie der dynamische Radius $R^{(dyn)}$ des Rads als Hebelarm der Reibkraft.

Betätigt der Fahrer eines Fahrzeugs z.B. bei Geradeausfahrt die Bremse, so wird ein bremsendes Drehmoment $T^{(B)}$ am Rad aufgebaut, welches größer ist als das Drehmoment der anderen Terme in der Gleichung

$$\frac{d}{dt}\left( J^{(R)} \cdot \Omega^{(R)} \right) = T^{(A)} + T^{(B)} + T^{(RW)} - R^{(dyn)}F_x.$$ Im Endergebnis kommt es zu einer Winkelbeschleunigung $\frac{d}{dt}\Omega^{(R)}(t)$ des bremsenden Rades. Nimmt diese zu hohe Werte an, ist die Radbewegung von der Bewegung des Fahrzeugs entkoppelt und das Rad droht zu blockieren. Dieses zu vermeiden ist Aufgabe eines Anti-Blockier-Systems (ABS).

Für den gebremsten bzw. angetriebenen pneumatischen Reifen auf ebener Fahrbahn werden in der Reifenaufstandsfläche (Latsch) i. A. zwei Zonen unterschieden, welche die in Rotation befindlichen Profilsegmente auf der Peripherie des Reifens durchlaufen:

(i) ein Haftbereich, beginnend am Rand des Latsch beim Einlaufen in die Kontaktzone des Reifens mit der Fahrbahn,
(ii) ein Gleitbereich, beginnend am Ende des Haftbereichs und endend am anderen Rand des Latsch beim Auslaufen.

Im Haftbereich der Radaufstandsfläche werden zwei benachbarte elastischen Profilsegmente des angetriebenen (bzw. gebremsten) rollenden Reifens nachdem Einlaufen in die Kontaktzone des Reifens proportional zu Ihrer Verweildauer in tangentialer Fahrtrichtung $\mathbf{e}_x$ auseinander gezogen (bzw. zusammengedrückt). Wird dann z.B. bei Geradeausfahrt ein kritischer Schwellwert für das Antriebs- bzw. Bremsmoment überschritten, so wird noch vor dem Auslaufen aus dem Bereich des Latsch mit Ausdehnung L nach Durchlaufen einer Strecke $L^{(H)} < L$ die maximal mögliche Haftkraft

$F_x^{(H,max)}$ in Fahrtrichtung $\mathbf{e}_x$ erreicht und es ereignet sich daran anschließend der Übergang von Haftreibung zur Gleitreibung.

Rotiert der Reifen mit Winkelgeschwindigkeit $\Omega^{(R)}$ um die Drehachse $\mathbf{e}_y$, dann wird ein kleines Profilsegment beim geradeaus rollenden Reifen in Fahrtrichtung $\mathbf{e}_x$ mit der mittleren Radumfangsgeschwindigkeit

$$U_x^{(R)} = R^{(dyn)} \Omega^{(R)}$$

die Länge **L** des Latsch in der Zeit

$$T = \frac{L}{\left| U_x^{(R)} \right|}$$

durchqueren. Nimmt man nun an, dass ein solches kleines Profilsegment im gesamten Bereich des Latsch auf der Fahrbahn haftet, d.h. $L^{(H)} = L$, dann ist die Geschwindigkeit des betreffenden Segments gleich der Fahrzeuggeschwindigkeit, hier definiert als Geschwindigkeit $V_x$ des Radmittelpunktes (Radachse) in tangentialer Richtung $\mathbf{e}_x$ der Fahrbahn. Beim angetriebenen Rad wird während einer kleinen Zeitspanne $dt \ll T$ ein kleines elastisches Profilsegment der Ausdehnung $\Delta S^{(P)}$ am Ort s im Latsch um eine Distanz ds proportional zum Geschwindigkeitsunterschied $U_x^{(R)} - V_x$ in Längsrichtung $\mathbf{e}_x$ gedehnt. Die Dehnung selbst nimmt bei einem Elastomer wie Gummi dabei proportional zur Verweildauer $t$ im Latsch zu, bis schließlich das Profilteilchen nach der Zeit T zum anderen Ende des Latsch gelangt ist, wo es sich wieder entspannt:

$$\mathrm{ds} = \frac{t}{T} \times \left( U_x^{(R)} - V_x \right)\mathrm{dt}$$

Somit überträgt ein elastisches Profilteilchen zum Zeitpunkt t seines Aufenthalts im Latsch während der Zeitspanne dt in tangentialer Richtung eine Kraft proportional zur (tangentialen) Federkonstanten $\boldsymbol{C}_T$ und proportional zur Auslenkung ds in Richtung $\mathbf{e}_x$

$$dF_x(t) = C_T\,ds = C_T\frac{t}{T} \times (U_x^{(R)} - V_x)dt$$

In der Reifenaufstandsfläche ist die Anzahl von Profilteilchen in Längsrichtung abschätzbar zu

$$N^{(P)} = \frac{L}{\Delta S^{(P)}+D}\;,$$

wobei D den mittleren Abstand benachbarter Profilteilchen im Reifen und $\Delta S^{(P)}$ die Ausdehnung eines unbelasteten Profilteilchens bezeichnet. Es folgt dann für die gesamte Kraft, die jedes Profilteilchen während der Verweilzeit T im Latsch überträgt, der Ausdruck

$$F_x = N^{(P)} \times \int_0^T dF_x(t) \;=\; \frac{C_T}{2}\frac{L^2}{\Delta S^{(P)}+D}\frac{U_x^{(R)}-V_x}{\left|U_x^{(R)}\right|}$$

In linearer Näherung folgt jetzt mit der Federkonstanten $\boldsymbol{C}_N$ des Reifens bei elastischer Verformung eines Profilteilchens in vertikaler Richtung um die Länge $\Delta r$ der Einfederung die entsprechende Kraft in Richtung der Normalen $\mathbf{e}_z$ der Reifenaufstandsfläche zu

$$F_z = C_N\Delta r\,.$$

Aufgelöst nach $\Delta r$ auflösen und eingesetzt in $R^{(S)} = R^{(0)} - \Delta r$, kann in der Gleichung für $F_x$ der Term $L^2$ zugunsten der Radlast $F_z$ eliminiert werden. Wir erhalten somit für kleine Auslenkung $\Delta r \ll R^{(0)}$ die folgende Proportionalität zwischen der traktiven Kraft $F_x$ und der Radlast $F_z$ :

$$F_x = \frac{2R^{(0)}}{\Delta S^{(P)}+D} \times \frac{C_T}{C_N} \times \frac{U_x^{(R)}-V_x}{\left|U_x^{(R)}\right|} \times F_z = \mu_x\,F_z.$$

Der Proportionalitätsfaktor $\mu_x$ bezeichnet den Längsreibwert

$$\mu_x = k\,\Lambda_x.$$

Dieser ist im Rahmen der vorangestellten Annahme, dass beim rollenden angetriebenem oder gebremsten Reifen alle Profilteilchen im gesamten Bereich des Latsch haften sollen, offensichtlich eine lineare Funktion des dimensionslosen Verhältnisses

$$\Lambda_x = \frac{U_x^{(R)}-V_x}{\left|U_x^{(R)}\right|}$$

Dieses Verhältnis ist der Längsschlupf, gemäß der vorgestellten Überlegungen ein physikalisch begründeter, fundamentaler Parameter in der Kontaktmechanik gummibereifter rollender Räder. Beim angetriebenem Rad ist $\Lambda_x > 0$, beim gebremsten Rad ist $\Lambda_x < 0$.

Der radindividuelle Proportionalitätsfaktor

$$k = \frac{2R^{(0)}}{\Delta S^{(P)} + D} \times \frac{C_T}{C_N}$$

ist nicht konstant. Für Gummi sind die Elastizitätskonstanten $C_N$ und $C_T$ von der Temperatur und vom Druck abhängig, zum anderen ändert sich $k$, weil mit zunehmender Abnutzung des Rades sich dann auch die Parameter $\Delta S^{(P)}$ und $D$ für die Profilteilchen des Rades ändern.

Eine Messung der translatorischen Geschwindigkeitskomponente $V_x$ und der Drehrate $\Omega^{(R)}$ des Reifens bestimmt allerdings noch nicht den Längsschlupf $\Lambda_x$, da der radindividuelle dynamische Radius $R^{(dyn)}$ des Rades zunächst nicht bekannt ist.

Zur (ungefähren) Abschätzung der Abhängigkeit der Größe des dynamischen Radius $R^{(dyn)}$ von der eingangs erwähnten Einfederungslänge $\Delta r$ betrachten wir zunächst den Fall, dass die Profilteilchen im Latsch eines geradeaus rollenden Reifen alle haften. Bewegt sich die Achse des Reifen unter Last bei einer Winkeldrehung $\Delta\varphi$ um die Strecke $\Delta x$ in Fahrtrichtung $\mathbf{e}_x$, so zeigt eine einfache geometrische Überlegung an einem rechtwinkligen Dreieck, mit dem eingefederten (vertikalen) Abstand $R^{(L)}$ des nicht rollenden Reifens

$$R^{(L)} = R^{(0)} - \Delta r$$

zur (ebenen) Fahrbahn als Ankathete und mit der Strecke $\Delta x$ in Fahrtrichtung $\mathbf{e}_x$ als Gegenkathete, den Zusammenhang

$$\Delta x = R^{(0)} \sin(\Delta\phi)$$

und

$$R^{(L)} = R^{(0)} \cos(\Delta\phi) \qquad .$$

Fasst man jetzt die Fortbewegung des Reifens als das Abrollen eines fiktiven starren Rades mit effektivem dynamischen Radius $R^{(dyn)}$ auf, so gilt notwendig

$$\Delta x = R^{(dyn)} \Delta\varphi$$

Für den effektiven Radius $R^{(dyn)}$ folgt die Abschätzung

$$R^{(dyn)} = \frac{\Delta x}{\Delta\phi} = R^{(0)} \frac{\sin(\Delta\phi)}{\Delta\varphi} = R^{(0)} \frac{\sqrt{1 - (1 - \frac{\Delta r}{R^{(0)}})^2}}{\arccos(1 - \frac{\Delta r}{R^{(0)}})} \cong R^{(0)} - \frac{1}{3}\Delta r - \frac{1}{45}\frac{(\Delta r)^2}{R^{(0)}} - \cdots$$

Der lineare Zusammenhang $\mu_x = k\,\Lambda_x$ für den Längsreibwert $\mu_x$ als Funktion des Längsschlupfes $\Lambda_x$ gilt allerdings nur unter der Annahme, dass alle Profilteilchen im Latsch des Reifens während der Zeit T auf der Fahrbahn haften, d.h. der Betrag der wirkenden traktiven - bzw. bremsenden Kraftkomponente $F_x$ bleibt stets unterhalb der maximal möglichen Haftkraftkomponente $F_x^{(H,max)}$ in Fahrtrichtung.

Bei Fahrzeugen ist die radindividuelle Einfederungslänge $\Delta r$ und damit der effektive Radius $R^{(dyn)}$ der montierten Räder auch noch von der zu transportierenden Last abhängig und ändert sich beim Beladen und Entladen entsprechend. Auch der Zustand der Fahrbahn, und sogar die Aerodynamik der Karosserie bei hoher Geschwindigkeit (Anpressdruck) beeinflussen $\Delta r$ und damit $R^{(dyn)}$.

Aufgrund der elastischen Eigenschaften von rollenden am Fahrzeug montierten Reifen ist die Druckverteilung im Latsch mit zunehmender Last asymmetrisch in der Radaufstandsfläche verteilt. Im hinteren Bereich des Latsch fällt der Druck ab, während er im vorderen Bereich des Latsch, da wo die Profilteilchen beim rollenden Rad einlaufen, der Druck ansteigt. Da im vorderen Abschnitt des Latsch gemäß Gleichung (26) die Profilteilchen weniger stark ausgelenkt werden als im hinteren Bereich, wird daher im hinteren Bereich, da wo der Druck jetzt niedriger ist, die Haftgrenze eher erreicht.

Eine Erhöhung der Last kann demnach beim rollenden Reifen infolge der Asymmetrie der Druckverteilung zu einer Abschwächung der maximal möglichen übertragbaren Reibkraft zwischen Reifen und Fahrbahn führen.

Faktoren wie fahrbahnerregte Hubbewegungen , Nick- und Wankbewegungen des Fahrzeugs beim Beschleunigen bzw. Bremsen, vermögen die Länge der Einfederung $\Delta r$ gegenüber dem Wert beim ruhenden Fahrzeug je nach Beschaffenheit der Fahrbahn, bei Geradeaus - und Kurvenfahrt, in jedem Augenblick zu ändern. Die Länge $\Delta r$ der Einfederung und damit der effektive Radius $R^{(dyn)}$ des belasteten rollenden Rades ist somit eine radindividuelle zeitlich veränderliche Zustandsgröße.

Nach dem Gesagten verknüpft der Längsschlupf (33) den translatorischen Freiheitsgrad der Drehachse des Rades parallel zur Fahrbahnebene - also die Geschwindigkeitskomponente $V_x$ des Fahrzeugs in Fahrtrichtung $\mathbf{e}_x$ - jetzt

$$U_x^{(R)} = R^{(dyn)}\Omega^{(R)}$$

mit der Radgeschwindigkeit für diejenigen Profilteilchen des Rades, die sich im betrachteten Zeitintervall gerade im Latsch befinden und die Fahrbahn berühren.

Der radindividuelle Längsschlupf $\Lambda_x$ ist demnach von der Fahrzeuggeschwindigkeit $V_x$ und der Radumfangs-geschwindigkeit $U_x^{(R)}$ abhängig.

Die Fahrzeuggeschwindigkeit $V_x$ kann in jedem Augenblick dem Stand der Technik entsprechend sehr genau, elegant und zuverlässig z.B. mit dem Differenz-Laser-Doppler-Verfahren gemessen werden.

Die Bestimmung der Radumfangsgeschwindigkeit $U_x^{(R)}$ erfordert nach dem Gesagten die Kenntnis der radindividuellen Winkelgeschwindigkeit $\Omega^{(R)}$ um die Drehachse $\mathbf{e}_y$ und die Kenntnis des effektiven Radius $R^{(dyn)}$. Bei heutigen, dem Stand der Technik entsprechenden Fahrsicherheitssystemen wie ABS bzw. ASR wird die Drehrate $\Omega^{(R)}$ mit Hilfe eines Raddrehzahlsensors, z.B. auf Basis eines Polrades, welches elektrische Impulse an eine Elektronik weitergibt, bestimmt. Für die Messung des radindividuellen effektiven dynamischen Radius $R^{(dyn)}$ des am Fahrzeug montierten rollenden gummibereiften Rades in jedem Augenblick, mag dieser angetrieben oder frei rollend oder gebremst sein, ist bisher kein Verfahren bekannt.

Im Folgenden wird nun offenbart, wie ohne jede zeitliche Verzögerung der effektive Radius $R^{(dyn)}$ des rollenden Fahrzeugreifens, mittels Faseroptik genau und radindividuell gemessen werden kann.

Bei kleinen Antriebs- bzw. Bremsmomenten gibt es im Kontaktgebiet des Reifens (fast) kein Gleiten, die entsprechenden (kleinen) Schlupfwerte sind dann vor allem auf die elastischen Deformationen im Rad zurückzuführen. Mit zunehmenden Längsschlupf entstehen jetzt im Latsch i.a. zwei Zonen, beim Einlaufen ein Haftbereich der Länge $L^{(H)}$ < $L$ und beim Auslaufen ein komplementärer Gleitbereich der Länge $L - L^{(H)}$. Bei weiter zunehmenden Antriebs- bzw. Bremsmomenten wird dann der Haftbereich kleiner und die Gleitzone im Bereich des Latsch entsprechend größer. Wenn schließlich das gesamte Kontaktgebiet in der Aufstandsfläche des rollenden Reifens gleitet, kann dieser überhaupt nicht mehr kontrolliert gesteuert werden.

Grundsätzlich ist die traktive bzw. bremsende Kraft

$$F_x = \mu_x(\Lambda_x)\ F_z$$

im Latsch für größere Längsschlupfwerte $\Lambda_x$ aus einem radindividuellen Deformationsanteil und einem Gleitanteil zusammengesetzt. Bei Geradeausfahrt auf ebener Fahrbahn ist die bestimmende Kenngröße der Längsreibwert $\mu_x$ als Funktion des Längsschlupf $\Lambda_x$. Die Reibwertkurve $\mu_x(\Lambda_x)$ ist i.a. von der Fahrbahnbeschaffenheit abhängig und nur empirisch bekannt.

Durch Lenkbewegungen ändert sich die Orientierung der Radachse, jetzt mit entsprechender Radgeschwindigkeit $\mathbf{U}^{(R)} = U_x^{(R)}\mathbf{e}_x + U_y^{(R)}\mathbf{e}_y$ bezogen auf das Koordinatensystem der Fahrbahn. Auf die Profilteilchen im Latsch wirkt dann zusätzlich zu $F_x = \mu_x(\Lambda_x)\ F_z$ in Reifenquerrichtung die Kraftkomponente

$$F_y = \mu_y(\Lambda_y)\ F_z\ ,$$

mit dem sog. Querreibwert $\mu_y(\Lambda_y)$ als Proportionalitätsfaktor.

Der entsprechende radindividuelle Schräglaufwinkel $\alpha^{(R)}$ des Rades ist dann in jedem Augenblick gegeben zu

$$\tan\left(\alpha^{(R)}\right) = \frac{U_y^{(R)}}{U_x^{(R)}}$$

Eine radindividuelle Querkraftkomponente $F_y$ resultiert aber nicht nur als Folge der Komponente $U_y^{(R)}$ der Relativbewegung des Rades quer zur (augenblicklichen) Fahrtrichtung $e_x$, sondern entsteht auch infolge eines von Null verschiedenen Sturzwinkels $\gamma^{(R)}$ zwischen Radmittelebene und Fahrbahn. Solange die Bedingung erfüllt ist, dass alle Profilteilchen im Latsch haften, ist der Querreibwert $\mu_y(\Lambda_y)$ für kleinen Schräglaufwinkel $\alpha^{(R)}$ bzw. kleine Quergeschwindigkeit $U_y^{(R)}$ dann direkt proportional zum Querschlupf

$$\Lambda_y = \frac{U_y^{(R)}}{\left|U_x^{(R)}\right|}$$

Bei normalem Fahrbetrieb auch auf ebener Fahrbahn sind in (fast) jedem Augenblick Lenkkorrekturen notwendig, d.h. es treten Seitenschlupf und Querschlupf gleichzeitig auf. Die beiden Funktionen $\mu_x(\Lambda_x)$ und $\mu_y(\Lambda_y)$ sind Grundlage für alle Überlegungen zur Kraftübertragung zwischen Reifen und Fahrbahn.

Für die Regelung von Fahrsicherheitssystemen kann anstelle des physikalischen Längsschlupfes $\Lambda_x$ und des Querschlupfes $\Lambda_y$ einen normierten Gesamtschlupf $\sigma$ verwendet werden.

$$\sigma = \sqrt{\sigma_x^2 + \sigma_y^2},$$

$$\sigma_x = \frac{\Lambda_x}{1+\Lambda_x}, \quad \sigma_y = \frac{\Lambda_y}{1+\Lambda_y}$$

Charakteristische Parameter der i.A. nicht monoton steigenden Kurve $\mu(\sigma)$ sind (i) die Steigung

$\mu'(0) = \lim_{\sigma \to 0} \frac{d\mu}{d\sigma}$ der Kurve am Ursprung $\sigma = 0$, (ii) der spezifische radindividuelle Schlupfwert $\sigma^{(H)}$ entsprechend dem maximal möglichen Reibwert $\mu^{(max)} = \max_\sigma \mu(\sigma) = \mu(\sigma^{(H)})$ für maximale Haftreibungskraft

$F_x^{(H,max)} = \mu^{(max)} F_z$ , und schließlich (iii) der asymptotische Wert

$\mu^{(G)} < \mu^{(max)}$ der Kurve $\mu(\sigma)$ für große Schlupfwerte $\sigma \gg \sigma^{(H)}$, wenn die Ausdehnung der Haftzone im Latsch gegen Null strebt, also fast überall im Latsch jetzt Gleitreibung herrscht, so dass $L^{(H)} \to 0$.

Um bei einer Notbremsung in Kombination mit einem Ausweichmanöver die Grenzen der Kraftschlussbeanspruchung im Reifen optimal nutzen zu können, ist die möglichst exakte Kenntnis der Kräfte im Reifenlatsch über den Schlupfzustand essentiell.

Treten beim Bremsen des Fahrzeugs zu große Längsschlupfwerte auf, dann können nur unzureichend Seitenkräfte übertragen werden, was die Lenkfähigkeit des Fahrzeugs stark einschränkt. Dies ist die Aussage des Kammschen Kreises, dass nämlich die Beträge der Längskraft und der dazu orthogonalen Seitenführungskraft voneinander abhängen müssen, einfach weil die aus diesen beiden Kräften resultierende Gesamtkraft dem Betrage nach die jeweilige radindividuelle maximale Haftreibungskraft nicht überschreiten kann. Wird das Rad angetrieben oder gebremst, ist vor allem der Längsreibwert maßgeblich. Eine optimale Verzögerung bzw. Beschleunigung - bei nicht spurgeführten Fahrzeugen - ist somit nur bei Geradeausfahrt möglich.

Fahrassistenzsysteme benötigen die Kenntnis des radindividuellen Reibwerts $\mu(\sigma)$ an allen Rädern des Fahrzeugs, um die Grenzen der maximal möglichen Längs- und Querbeschleunigungen anzuzeigen und auszuwerten. Dabei wird durch Regelung des Antriebs- bzw. Bremsmoments des Fahrzeugs der Schlupf am Reifen so begrenzt, dass ein Durchdrehen bzw. Blockieren der Räder verhindert wird. Idealerweise erhält die betreffende Regelung die Lenkbarkeit des Fahrzeuges, weil zugleich auf ein ausreichend hohes Seitenführungspotenzial geachtet wird.

Sinn und Zweck von Fahrsicherheitssystemen wie ABS bzw. ASR ist es, im Latsch das Verschwinden der Haftzone beim gebremsten bzw. angetriebenem Rad unbedingt zu vermeiden.

Dem Stand der Technik entsprechende

Antriebsschlupfregelungssysteme (ASR) und Antiblockiersysteme (ABS) für Fahrzeuge können heutzutage den fahrbahn- und radindividuellen Reibwert $\mu(\sigma)$ im Kontaktgebiet des Reifens mit der Fahrbahn allerdings nicht direkt erfassen, sondern schätzen diesen mittels eines ausgeklügelten Algorithmus. Dies gilt auch für moderne Torque-Vectoring-Systeme zur aktiven Fahrdynamikregelung. Zweck dieser Systeme ist die Verbesserung der Spurstabilität eines Fahrzeugs in engen Kurven, indem die Bremskraft auf das innere Rad und die Leistung auf das äußere Rad übertragen wird.

Beim Antriebsschlupf fährt das Fahrzeug langsamer als sich die Antriebsräder drehen. Im Extremfall (bei 100 % Schlupf) drehen die Antriebsräder durch, während das Fahrzeug still steht.

Der Antriebsschlupf wird durch ein Traktions-Kontroll-System (TCS) in den wünschenswerten Grenzen gehalten.

Beim Bremsschlupf fährt das Fahrzeug schneller als sich die Räder drehen. Im Extremfall blockieren die Räder (sie stehen still), während sich das Fahrzeug weiter bewegt. Gerade dieser Extremfall soll durch ein Anti-Blockier-System (ABS) verhindert werden, weil blockierende Räder keine Seitenführungskräfte auf die Straße mehr übertragen können, so dass Lenken unmöglich wird.

Stand der Technik bei Sensoren zur Erfassung von Beschleunigung und Raddrehzahl im automotiven Bereich. In der heutigen Automotivindustrie zum Einsatz kommende Fahrerassistenzsysteme wie z.B. ABS (Antiblockiersystem) und ASR (Antriebsschlupfregelung) sowie ESP (Elektronisches Stabilitätsprogramm) oder auch sog. Torque-Vectoring-Systeme, verwenden Raddrehzahlsensoren, Drehraten- und auch Beschleunigungssensoren zur Erfassung wichtiger Daten des Fahrzeugverhaltens, z.B. Lenkwinkel, Fahrzeuggeschwindigkeit, Querbeschleunigung oder die Gierwinkelgeschwindigkeit.

Um z.B. die Drehzahl von gummibereiften Rädern überwachen zu können, werden als Standardsensoren überwiegend berührungslos arbeitende Drehzahlsensoren eingesetzt. Diese erfassen die Drehbewegungen von z. B. ferromagnetisch beschichteten Zahnrädern. Abhängig von der jeweiligen Anforderung kommen hier verschiedene Messprinzipien zum Einsatz (Induktivmagnetisches Prinzip, Differenz-Hall-Prinzip, Wirbelstrom Prinzip).

Die vom Sensor erfasste Drehzahl wird durch einen Signalverstärker in ein elektrisches Rechtecksignal umgesetzt, dessen Frequenz direkt proportional zur Drehzahl ist. Durch eine nachgeschaltete Komponente zur Signalverarbeitung kann das Signal ausgewertet oder umgeformt werden.

Auch eine Kontrolle des Reifendrucks kann über die Raddrehzahlsensoren erfolgen. Erleidet z.B. ein pneumatischer Reifen einen Druckabfall, so dreht dieser sich aufgrund des bei niedrigerem Fülldruck nun geringeren Umfangs schneller, d.h. ein Raddrehzahlsensor kann durch Abgleich mit den Drehraten der übrigen Reifen indirekt auf einen Druckabfall im Reifen hinweisen, einmal angenommen, der Druckabfall betrifft nicht gleichzeitig alle Reifen des Fahrzeugs.

Genauer und zuverlässiger als solche indirekten Methoden funktionieren im Inneren der Reifen positionierte Sensorsysteme für Druck und Temperatur des Füllgases (in pneumatischen Reifen meist Luft), deren Messdaten dann z.B. per Funkübertragung an die Steuergeräte im Fahrzeug übermittelt werden.

Das Messprinzip der erwähnten Sensoren beruht typischerweise auf der Erfassung elektrischer Signale, verursacht durch charakteristische Änderungen der Impedanz elektrischer Einzel- oder Mehrdrahtanordnungen (ohmsch, kapazitiv oder induktiv) von am System Rad- Reifen bzw. im Fahrzeug fix montierten Sensoren bzw. Sensorclustern. Als Messgeber dienen dabei oft piezotechnologische Elemente, Hallsensoren und Mikro-Elektro-Mechanische Systeme (MEMS). MEMS-Beschleunigungssensoren als miniaturisierte, z.B. kapazitiv gekoppelte Masse-Feder Systeme dienen der Erfassung der auf ein Fahrzeug einwirkenden Kräfte beim Beschleunigen und Bremsen. Sie kommen z.B. auch in der Fahrzeugsicherheitstechnik zum Zünden der Airbags im genau richtigen Moment zum Einsatz.

Ein Masse-Feder System ist vom Wirkprinzip her betrachtet ein **dynamisches** Messinstrument, d.h. die Beschleunigung wird indirekt über eine Kraft gemessen, die z.B. entlang der Achsen des Beschleunigungssensors über die Auslenkung von miniaturisierten mechanischen Federn kapazitiv gemessen wird. Die momentane Geschwindigkeit sowie die zurückgelegte Strecke zu einer Zeit t am Ort **r** des Masse-Feder Systems muss dann noch ausgehend von bekannten Anfangswerten durch zeitliche (numerische) Integration von Bewegungsgleichungen ermittelt werden.

MEMS können allerdings, falls diese im Inneren eines Fahrzeugreifens zur Erfassung von fahrbahnerregten Vibrationen montiert sind, nach einem kräftigen Schock, wie es z.B. vorkommt, wenn ein Fahrzeugreifen durch ein Schlagloch fährt, während einer gewissen Latenzzeit leider keine Messdaten aufnehmen, d.h. der Sensor ist während dieser Zeit blind. Aktive Sensoren benötigen zudem eine Stromversorgung. Im Inneren von Fahrzeugreifen fixierte, autarke Systeme werden dabei z.B. von einer Batterie versorgt und es erfolgt die Übertragung von Messdaten z.B. per Funk. Zum einen ist dabei die von der Batterielebensdauer abhängige Funktionsfähigkeit sowie die Einhaltung von regulatorischen Schutzanforderungen zur EMV beim Senden als Nachteil zu werten. Zum anderen ist die Bandbreite (maximale übertragbare Datenrate) bei solchen Funkstrecken begrenzt. Beim Einsatz im Hochgeschwindigkeitsbereich muss auch daran gedacht werden, die durch den Einbau solcher Systeme im Reifen entstehende Unwucht zu korrigieren.

Physikalischer Hintergrund der Erfindung bzw. von Ausführungsbeispielen der Erfindung:

Gegenstand der Erfindung bzw. von deren Ausführungsbeispielen ist eine technische Vorrichtung auf Basis von Faseroptik zur Messung des radindividuellen Schlupfes und des Spektrums von fahrbahnerregten mechanischen Vibrationen, wie sie typischerweise bei den Reifen und Rädern (Felgen) von sich in Bewegung befindlichen ein- oder mehrspurigen Fahrzeugen auftreten. Die Vorrichtung ermöglicht zugleich, den typischerweise in der Kontaktfläche (Latsch) eines pneumatischen Fahrzeugreifens auftretenden Schlupf beim Beschleunigen und Bremsen des Fahrzeugs in **Echtzeit** radindividuell zu detektieren und ein entsprechendes Signal zur Auswertung in Antiblockiersysteme (ABS), elektronische Stabilisierungsprogramme (ESP), Systeme zur Antriebsschlupfregelung (ASR) und auch Systeme zur Fahrdynamikregelung bei Kurvenfahrt (Torque Vectoring) zu übertragen.

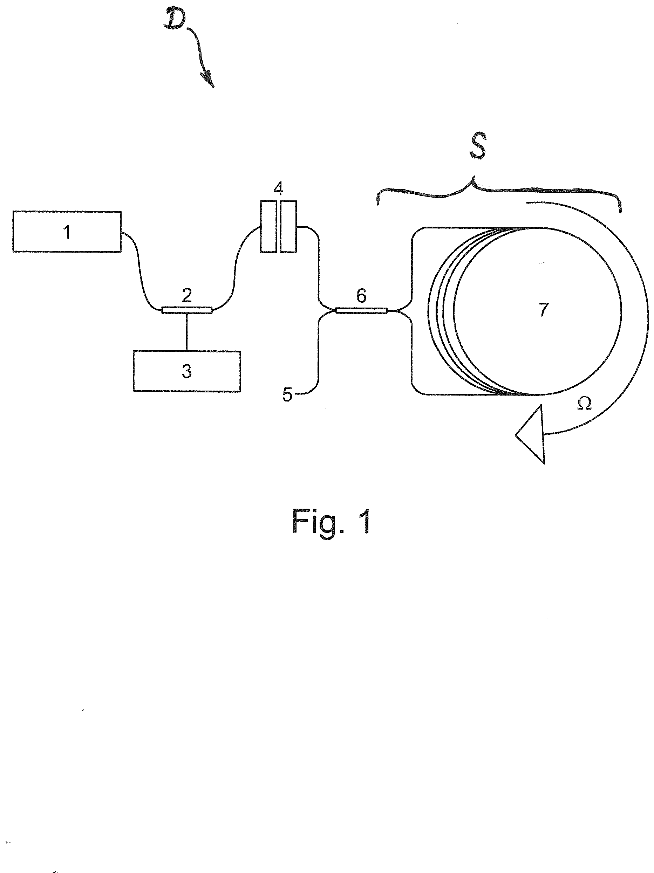

Die Fig. 1 zeigt den prinzipiellen Aufbau eines faseroptischen Ringinterferometers. Wenn z.B. zwei identisch präparierte Lichtsignale in entgegengesetzter Richtung entlang des Faserkerns eines dielektrischen Wellenleiters propagieren, der jetzt eine Fläche $A$ mit Flächennormalen $\mathbf{n}_A$ umschließen möge, die relativ zu einem Inertialsystem mit Winkelgeschwindigkeit $\Omega$ um eine Drehachse $\mathbf{n}_\Omega$ rotiert, so erfahren die beiden Signale nach einem Umlauf eine Differenz der optischen Weglänge proportional zum Produkt $A\,\Omega\,\cos(\vartheta)$, wobei $\vartheta$ den Winkel zwischen den beiden Einheitsvektoren $\mathbf{n}_A$ und $\mathbf{n}_\Omega$ .bezeichnet. Dies ist das Wirkprinzip des Sagnac-Effekts, wie er z.B. in modernen Lasergyroskopen zum Einsatz kommt. Durch Verwendung einer optischen Faserspule mit einer Anzahl N von Windungen kann die effektive Fläche beim Sagnac Effekt und damit die Spanne der messbaren Drehraten in einem weiten Bereich um den Faktor N der Windungszahl gesteigert werden. Die Erfindung offenbart ein spezifisches kinematisches faseroptisches Detektionsprinzip für Fahrzeugreifen und Räder, welches nicht nur bei gleichförmiger Geradeausfahrt, sondern auch bei Kurvenfahrt und insbesondere beim Beschleunigen und Bremsen, die Fähigkeit besitzt, in Echtzeit und radindividuell den Schlupf im Latsch und auch das Spektrum von fahrbahnerregten mechanischen Vibrationen des Systems Reifen - Felge breitbandig zu messen. Ebenfalls können sowohl schnelle als auch langsame zeitliche Veränderungen von radindividuellen Parametern wie z.B. Temperatur und Fülldruck mittels der offenbarten intrinsischen faseroptischen Sensorik breitbandig gemessen werden. Hervorzuheben ist, dass alle charakteristischen Frequenzen von fahrbahnerregten Vibrationen des Systems Reifen-Felge um viele Größenordnungen kleiner sind als die Bandbreite der typischerweise in einem dielektrischen optischen Lichtleiter propagierenden Lichtsignale. Gebräuchliche Frequenzen $v$ bzw. Wellenlängen $\lambda$ (im Vakuum) liegen z.B. bei kostengünstigen Glasfasern typischerweise im Bereich von ca. 1550 nm, entsprechend einem Frequenzfenster mit kleiner Dämpfung von 0.2 dB/km im verwendeten Quarzglas ($SiO_2$) bei etwa $v = 2 \times 10^{14}$ $Hz$ (nahes Infrarot). Der Wellenlängenbereich 1500 nm $< \lambda <$ 1550 nm entspricht z.B. bereits einer Bandbreite von 6.4 THz.

Mit Hilfe der in der Erfindung offenbarten faseroptischen Methode kann der Schlupf von gummibereiften Fahrzeugrädern unter Last auf Fahrbahnen mit ganz unterschiedlichen Adhäsionskoeffizienten (trockene, nasse, Schnee bedeckte Fahrbahn) in Echtzeit gemessen werden, d.h. der Aufbau der optimalen radindividuellen Bremskraft kann schneller und viel präziser geregelt werden. Auch können z.B. auf einer Fahrbahn mit unterschiedlichen Reibwerten zwischen rechter und linker Seite bei mehrspurigen Fahrzeugen die bei einer Vollbremsung dann auftretenden Giermomente mittels der offenbarten faseroptischen Methode in Echtzeit erfasst und somit schneller und besser kompensiert werden.

Die eingangs beschriebenen tangentialen Relativbewegungen von Profilteilchen des rollenden gummibereiften Rades können mittels der hier offenbarten faseroptischen Detektionsmethode in Echtzeit radindividuell erfasst und sodann über eine geeignet ausgelegte optische Drehdurchführung vom rotierenden Bezugssystem des Reifens an ein Steuer- und Auswertesystem im Bezugssystem des Fahrzeuginneren übertragen werden. Rollende Fahrzeugreifen werden aber nicht nur im Haftbereich des Latsch aufgrund der Zugspannung mechanisch gedehnt oder gestaucht, sie besitzen gemäß obiger Ausführungen ein individuelles, charakteristisches und fahrbahnerregtes, vom Fülldruck und der Temperatur abhängiges Spektrum von Vibrationen, das sich insbesondere beim Beschleunigen bzw. Abbremsen sowie bei Kurvenfahrt verändert. Bei hohen Geschwindigkeiten des Fahrzeugs, d.h. großen Drehraten des Reifens, sind zudem Coriolis-Kräfte relevant, so dass sich im rollenden Reifen bei hoher Geschwindigkeit anstelle einer stehenden elastischen Mode (bezogen auf das rotierende Bezugssystem der Felge) nunmehr zwei gegensätzlich umlaufende elastische Moden im Fahrzeugreifen mit aufgespaltenen Eigenfrequenzen ausbilden können, was z.B. nicht nur die übertragbaren Bremskräfte mindert, sondern schlimmstenfalls auch den Reifen derart verformen kann, dass dieser platzt. Da einer quasiperiodisch wiederkehrenden niederfrequenten Deformationsamplitude der Profilteilchen des Reifens bei Durchlauf durch den Reifenlatsch beim rollenden Reifen stets noch die hochfrequenten Deformationen durch die Beschaffenheit und Textur der Fahrbahn überlagert sind, erfolgt die Anregung beim Abrollen eines Fahrzeugreifens auf einer (stets rauen) Fahrbahn somit multimodal. Bei der zur Verfügung stehenden großen Bandbreite von ca. 6000 GHz für optische Glasfasern im Wellenlängenbereich 1500 nm $< \lambda <$ 1550 nm ist die faseroptische Erfassung und Übertragung des gesamten Vibrationsspektrums bis weit in den Ultraschallbereich ohne Weiteres in jedem Augenblick möglich.

Abnutzungseffekte bei Reifen betreffen z.B. Masseverlust, Profilverlust und Erhöhung des Rollwiderstands. Bei den für Fahrzeugreifen gebräuchlichen technischen Gummimischungen kann es auch zu einer belastungsinduzierten Entfestigung kommen (Mullins-Effekt).

Über längere Zeiträume betrachtet führen die genannten Effekte zu charakteristischen Änderungen in den Amplituden des radindividuellen Schwingungsspektrums. Diese Information kann z.B. in einer fahrzeugindividuellen Datenbank protokolliert werden, so dass Probleme identifiziert und gegebenenfalls Fahrzeugreifen mit kritischen Merkmalen rechtzeitig ausgetauscht werden können.

Die im folgenden Abschnitt dargestellte erfinderische Lösung ermöglicht es, die angeführten i. A. zeitlich veränderlichen Signale rollender Fahrzeugreifen radindividuell , präzise und breitbandig in Echtzeit zu messen und mit hoher Datenrate zuverlässig an ein außerhalb des Reifeninneren positioniertes Kontrollmodul zwecks Auswertung zu übertragen. Nicht nur der Reifeningenieur, auch der Manager einer Fahrzeugflotte kann so verschiedene Optimierungsziele hinsichtlich Sicherheit, Bremsweg, Spritverbrauch, Intervalle der Radwechsel, Abnutzung und nicht zuletzt die Kosten betreffend besser realisieren.

Im Unterschied zum *dynamischen* Wirkprinzip von Masse-Feder Systemen ist ein faseroptisches Ringinterferometer ein rein *kinematischer* Messapparat, welcher den Laufzeitunterschied von zwei oder mehr Lichtsignalen als Phasenverschiebung registriert, wenn diese nach Durchlaufen des Faserrings in entgegengesetzter Richtung dann im rotierenden System zur Interferenz gebracht werden.

Erfinderische Lösung und Ausführungsbeispiele:

Die Aufgabe, radindividuell und als Funktion der Zeit t , bei Geradeausfahrt, bei Fahrt durch Kurven , beim Bremsen und beim Beschleunigen, für die Reifen eines Fahrzeugs simultan die Winkelgeschwindigkeit $\Omega(t)$, die momentane Orientierung der Drehachse $\mathbf{n}_\Omega(t)$ und auch das Spektrum der elastischen Deformationen an im Inneren des Reifengürtels fixierten Punkten breitbandig zu messen, kann entsprechend durch ein im Reifen-Radsystem integriertes **faseroptisches Ringinterferometer** basierend auf dem robusten Wirkprinzip des Sagnac-Effekts gelöst werden.

Eine hierzu geeignete Vorrichtung ist in Fig. 1 skizziert. Sie besteht im Prinzip aus einer (hinreichend) monochromatischen Lichtquelle, einem Fotodetektor, einer faseroptischen Drehkupplung, einem faseroptischen Zirkulator , mehreren faseroptischen Kopplern und einer langen , dünnen, biegsamen ringförmig geschlossenen optischen Faser in Gestalt eines geschlossenen Faserrings P , die im Inneren des Reifens entlang geeignet positionierter Punkte des Reifengürtels fixiert sind, wie es beispielhaft in Fig. 2 und Fig. 3 dargestellt ist.

Der Erfindung liegt die Erkenntnis zugrunde, dass sich für den Unterschied $\Delta L$ in der Länge des optischen Weges für einen entlang der Achse des Faserkerns umlaufenden Lichtstrahl, wenn sich jedes Längenelement $d\mathbf{s}$ der Faser am Ort $\mathbf{s}$ mit individueller Geschwindigkeit $\mathbf{v}(\mathbf{s})$ relativ zum Ruhesystem der Faser bewegt, nach einem Umlauf des Pfades P der folgende Ausdruck ergibt:

$$\Delta L = \frac{1}{c} \int_P d\mathbf{s} \cdot \mathbf{v}(\mathbf{s})$$

Das Pfadintegral kann, wenn etwa der Pfad P in der zweidimensionalen Ebene liegt, in ein äquivalentes Flächenintegral umgeformt werden. Windet sich die optische Faser P z.B. genau eine Anzahl $N$ von Malen um die vom Rand $\partial A$ eingeschlossene Fläche $A$, so folgt entsprechend dem Satz von Stokes

$$\Delta L = \frac{N}{c} \iint_A d^2 r \; \mathbf{rot}\, \mathbf{v}(\mathbf{r})$$

Wird jetzt im rotierenden Bezugssystem des Reifens über einen faseroptischen Koppler Licht mit Frequenz $v$ bzw. Wellenlänge $\lambda = \frac{c}{v}$ (im Vakuum) in den Faserring eingekoppelt, und wird sodann der entlang des Faserkerns im Ring P umlaufende Lichtstrahl (+) mit dem gegenläufig umlaufenden Lichtstrahl (-) zur Interferenz gebracht, so ist die charakteristische Phasendifferenz bei dieser Zweistrahlinterferometrie

$$\Delta\varphi = \frac{2\pi}{\lambda} \left( \Delta L^{(+)} - \Delta L^{(-)} \right)$$

Dass diese auftretende Phasendifferenz (auch Sagnac-Phase genannt) ihren physikalischen Ursprung in der relativistischen Laufzeitverschiebung hat, wurde bereits von Albert Einstein im Jahr 1914 geklärt.

Tatsächlich ist die Phasendifferenz $\Delta\varphi$ für einen geschlossenen Pfad P völlig unabhängig von den Materialeigenschaften des Faserkerns, obwohl der optische Weg L in der bewegten Faser und der optische Weg $L_0$ im Ruhesystem

beide tatsächlich noch vom Brechungsindex des Faserkernmaterials abhängen.

Das Meßsignal ist dann z.B. die von einem Fotodetektor registrierte charakteristische drehratenabhängige Intensität des Interferenz-Signals der beiden entlang des Faserkerns gegenläufig propagierenden Lichtstrahlen, siehe Fig. 1:

$$I\left(\Delta\varphi\right) = \frac{1 + \cos\left(\Delta\varphi\right)}{2}$$

Im Spezialfall einer starren Rotation des optischen Faserrings mit Winkelgeschwindigkeit $\Omega = \Omega \mathbf{n}_\Omega$ ist das Geschwindigkeitsfeld gegeben zu $\mathbf{v(r)} = \Omega \times \mathbf{(r+r_0)}$, und es folgt mit $\mathbf{rot[v(r)]} = 2\Omega$ die als eigentlicher Sagnac-Effekt bekannte Relation:

$$\Delta\varphi = \frac{2\pi}{\lambda} \cdot \frac{4\Omega}{c} N \cdot A \cdot \cos\left(\vartheta\right)$$

Da die Konstante $\mathbf{r}_0$ beliebig ist, hängt das Ergebnis von der Wahl der Position der Drehachse **nicht** ab. Wirbelfreie Geschwindigkeitsfelder, $\mathbf{rot[v(r)]} \equiv \mathbf{0}$, ergeben offensichtlich keinen Effekt: $\Delta\varphi = 0$. Die Bewegung aller Elemente d**s** eines Faserrings mit derselben konstanten Geschwindigkeit $\mathbf{v}_0$ gibt demnach auch keinen Effekt.

Die Frequenzen bei fahrbahnerregten Verformungen von Fahrzeugreifen, wie sie z.B. beim rollenden Reifen eines in Bewegung befindlichen Fahrzeugs typischerweise als Dehnungsschlupf am Latsch des Reifengürtels in Erscheinung treten, sind um viele Größenordnungen kleiner im Vergleich zu derjenigen von Licht, welches entlang des Faserkerns einer optischen Faser propagiert. Dies bedeutet, dass für ein räumlich und zeitlich veränderliches Geschwindigkeitsfeld $\mathbf{v(r}, t)$, wie es z.B. im rollenden elastischen Reifengürtel eines fahrenden Fahrzeugs vorliegt, der betreffende optische Wegunterschied auch bei einer fahrbahnerregten zeitlich veränderlichen geometrischen Gestalt P(t) des Faserrings entsprechend gegeben ist zu

$$\Delta L(t) = \frac{1}{c} \int_{P(t)} d\mathbf{s} \cdot \mathbf{v}\left(\mathbf{s}, t\right)$$

Für einen am Fahrzeug montierten rollenden Reifen ist die Phasendifferenz $\Delta\varphi(t)$ proportional zur augenblicklichen Winkelgeschwindigkeit $\Omega(t) = 2\pi f_\Omega(t)$ des Reifens und proportional zu der zum Zeitpunkt t vom Faserring eingeschlossenen Fläche $A = A(t)$. Zusätzlich hängt $\Delta\varphi(t)$ noch vom Winkel $\vartheta = \vartheta(t)$ zwischen dem Normalvektor $\mathbf{n}_A$ der Fläche $A$ und der Drehachse $\mathbf{n}_\Omega$ ab. Fluktuiert nun bei einer momentan als konstant angenommenen Drehrate $\Omega_0$ auf einer - durch das Spektrum der radindividuellen Eigenmoden des Reifens gegebenen - schnelleren Zeitskala die von einer ringförmigen optischen Faser eingeschlossene Fläche gemäß $A(t) = A_0 + \delta A(t)$, und/oder ändert sich dabei die Orientierung der Drehachse - z.B. bei Kurvenfahrt - gemäß $\vartheta(t) = \vartheta_0 + \delta\vartheta(t)$, so fluktuiert die Phasendifferenz $\Delta\varphi(t) = \Delta\varphi_0 + \delta\varphi(t)$ gemäß

$$\delta\varphi(t) = \frac{2\pi}{\lambda} \frac{4\Omega_0}{c} \cdot N \cdot \left[\delta A(t)\cos\left(\vartheta_0\right) - A_0 \sin\left(\vartheta_0\right)\delta\vartheta(t)\right] \quad .$$

Bei geeigneter Wahl der Parameter $\lambda, N, A_0, \Omega_0, \vartheta_0$ und/oder durch Einsatz eines Phasen-schiebers kann

$$\Delta\varphi_0 = \frac{\pi}{2}$$ erreicht werden. Dann ist im Rahmen der Kleinsignalnäherung die zeitliche Fluktuation der registrierten Lichtintensität $I(\Delta\varphi)$ direkt proportional zur Relation für $\delta\varphi(t)$:

$$I\left(\Delta\varphi_0\right) - I\left(\Delta\varphi\right) = \frac{\delta\phi(t)}{2}$$

Mit Standardverfahren der Signalverarbeitung, z.B. mit der Fast Fourier Transformation (FFT), kann somit radindividuell ein für rollende Reifen charakteristisches Spektrum der betreffenden fahrbahnerregten Vibrationen aufgenommen, gespeichert und ausgewertet werden. Die gestellte Aufgabe wird demnach mit den in den Patentansprüchen wiedergegebenen Merkmalen durch ein intrinsisches faseroptisches Messverfahren auf Basis des verallgemeinerten Wirkprinzips des Sagnac - Effektes gelöst, siehe Fig. 1.

Spezielles Ausführungsbeispiel:

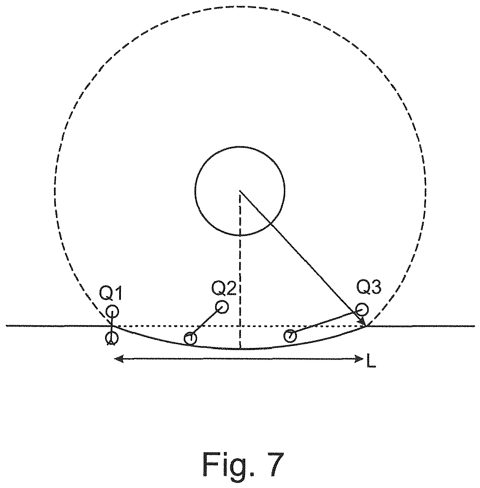

Die den optischen Faserring bildende Faser P wird über ein druckdichtes Ventil von der Felge in den Reifen ein- und ausgeführt. Im Reifeninneren ist mindestens ein optischer Faserring P, z.B. in der geometrischen Gestalt einer mäanderförmigen Kurve, entlang der Inneisolierung des gummibereiften Rades verlegt. An diskreten Punkten $Q_1$, $Q_2$, $Q_3$ usw. (siehe Fig. 2-4) sind Segmente des Faserrings fest mit inneren Schichten der Karkasse verbunden, so dass beim rollenden Fahrzeugreifen die bei Eintritt in den Haftbereich der Reifenaufstandsfläche einsetzenden elastischen Dehnungen von Profilteilchen des Reifens zu entsprechenden Bewegungen von Segmenten der Faser bei $Q_1$, $Q_2$, $Q_3$ usw. in Längs- und auch Querrichtung gegenüber deren Gleichgewichtsposition führen können, ohne dass dabei die optische Faser selbst gedehnt würde, siehe Fig. 7.

Infolge der Rotationsbewegung des Rades wird z.B. ein Punkt $Q_3$ nach Eintritt in die Haftbereich des Latsch nach einer charakteristischen Zeitspanne dann das andere Ende des Haftbereichs im Latsch erreichen. Während der Verweilzeit im Haftbereich dehnt sich das Gummimaterial , d.h. die betreffenden Punkte $Q_1$, $Q_2$, $Q_3$ usw. entfernen sich proportional zur Verweildauer im Haftbereich von einander und auch von ihrer Gleichgewichtsposition, die sie im Fall eines unbelastet frei rollenden Rades eingenommen hätten. Beim Auslauf aus dem Haftbereich ist dann die charakteristische gummielastische Dehnbewegung für einen betreffenden Punkt $Q_3$ in der Reifenaufstandsfläche plötzlich ausgesetzt und dieser Punkt schnappt innerhalb einer sehr kurzen Zeitspanne zurück in seine ursprüngliche Gleichgewichtsposition. Die betreffende rasche Änderung der Relativgeschwindigkeiten der Fasersegmente bei dieser Schnappbewegung von nacheinander aus der Haftzone des Latsch auslaufenden Fasersegmente an den Positionen $Q_1$, $Q_2$, $Q_3$ usw. gegenüber den nicht so stark beschleunigten Segmenten des Faserrings führt gemäß Gleichung (6) als Funktion der Zeit zu einem charakteristischen Pulssignal der Sagnac-Phase. Der beschriebene Effekt ermöglicht somit eine direkte radindividuelle Bestimmung der geometrischen Abmessung der Haftzone in der Aufstandsfläche bei gummibereiften rollenden Rädern unter Last sowohl bei Geradeausfahrt als auch in Kurven. Über die Messung der Frequenzen und Intensitäten dieser Signale kann zudem die Steigung bei kleinem Schlupf und der Maximalwert des fahrbahnindividuelle Reibwertes des Rades ermittelt werden. Bei extremen Fahrmanövern wie plötzliches Bremsen oder Beschleunigen kann die Messung der zeitlichen Änderung dieser Signale zum wirksamen Regeln von Fahrsicherheitssystemen in jedem Augenblick dienen.

Die Messung der Intensitätsschwankungen des durch die optische Drehkupplung in den Fotodetektor geleiteten Lichts gemäß des in Abb. 1 dargestellten faseroptischen Ringinterferometers liefert die folgenden unabhängigen radindividuellen Informationen:

(i) Winkelgeschwindigkeit und Winkelbeschleunigung am Ort der Drehachse des Rades,
(ii) der effektive dynamische Radius des rollenden Rades als zeitlicher Mittelwert über mehrere Radumdrehungen

$$R^{(dyn)} = \sqrt{A/\pi} \quad ,$$

gemäß
(iii) Bestimmung der Ausdehnung des Haftbereichs $L^{(H)}$ im Latsch beim rollenden Reifen unter Last aus der zeitlichen Abfolge der registrierten Pulssignale,
(iv) der Reifenschlupf $\sigma_x$ in Längsrichtung und $\sigma_y$ in Querrichtung,
(v) das Frequenzspektrum von hochfrequenten fahrbahnerregten Vibrationen im Reifen.

Im anwendungstypischen Einsatz als Sagnac-Interferometer kommen faseroptische 2x2 Koppler in Betracht, alternativ kann auch ein heterodynes Nachweisprinzip vorteilhaft verwendet werden.

Ausführungsbeispiele

Ein Ausführungsbeispiel der Erfindung ist in den Zeichnungen dargestellt und wird nachstehend unter Angabe weiterer Einzelheiten und Vorteile näher erläutert.

Im Einzelnen zeigen:

Figur 1    ein Schema eines faseroptischen Ringinterferometers,

Figur 2    der schematische Aufbau eines Fahrzeugreifens,

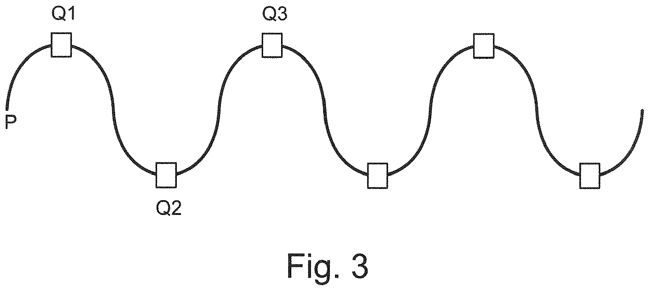

Figur 3    eine schematische Darstellung der geometrischen Anordnung eines Faserrings,

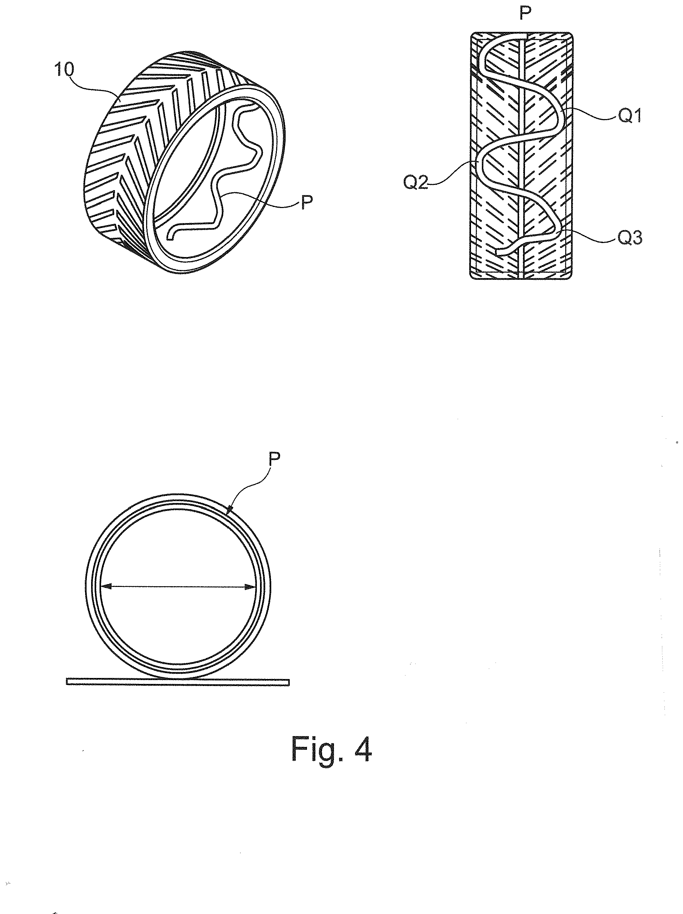

Figur 4    eine schematische Darstellung der Positionierung des Faserrings im Reifen,

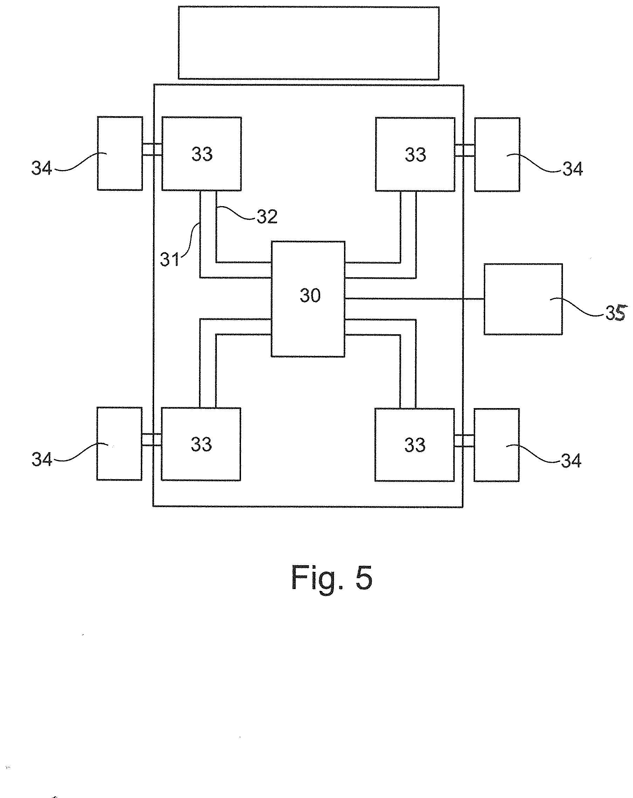

Figur 5     ein Schema einer Fahrzeug internen Rad individuellen und breitbandigen faseroptischen Signalerfassung,

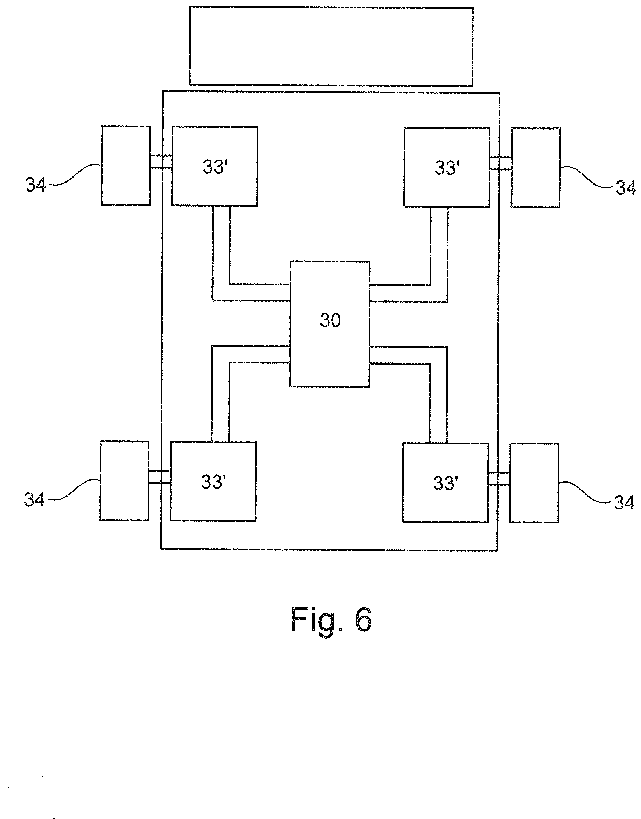

Figur 6     eine schematische Darstellung einer Signalerfassung für fahrdynamische Parameter, sowie

Figur 7     eine schematische Darstellung zur Änderung der optischen Weglänge im Bereich des Latsch.

Figur 1 zeigt eine schematische Darstellung eines faseroptischen Ringinterferometers zur Detektion von radindividuellen fahrdynamischen Parametern und fahrbahnerregten Vibrationen in gummibereiften Fahrzeugrädern gemäß der Erfindung. Über eine Lichtquelle 1 wird Licht in einen Lichtwellenleiter eingekoppelt. Das Licht kann sodann durch einen Zirkulator 2 geführt werden, der das Licht an verschiedene Ausgänge weiterleitet. An einen der Ausgänge ist ein Photodetektor 3 angebracht. Ein anderer Ausgang wiederum führt weiter über einen Lichtwellenleiter zu einer faseroptischen Drehkupplung 4. Diese Drehkupplung 4 bildet den Übergang vom statischen Teil zum rotierenden Reifen. Anschließend muss das Licht in zwei Teile aufgeteilt werden, die durch den sich anschließenden Faserring 7 in entgegengesetzter Richtung laufen können. Hierzu wird ein faseroptischer 2x2-Koppler (mit 3dB-Abschwächung) verwendet, der mit dem Bezugszeichen 6 gekennzeichnet ist. Einer der Ausgänge 5 kann als nicht-reziproker Ausgang frei bleiben. Das Rad dreht sich mit der Winkelgeschwindigkeit $\Omega$ in Pfeilrichtung. Sind die Lichtsignale in entgegengesetzter Richtung durch den Faserring 7 gelaufen, werden diese wieder im faseroptischen Koppler 6 zusammengeführt und gelangen schließlich über den Zirkulator 2 in den Photodetektor, so dass diese anschließend ausgewertet werden können.

In Figur 2 ist ein schematischer Aufbau eines gummibereiften Fahrzeugrades mit integriertem optischem Faserring gemäß der Erfindung dargestellt. Außen am Reifen 10 befindet sich der Laufstreifen 11, der mit der Straße in Kontakt kommt. In dem Laufstreifen 11 ist auch das Reifenprofil eingearbeitet. Die anschließenden Schichten umfassen eine Spulbandage 12, einen Stahlbandgürtel 13, ein Textilcord 14. Daran schließt sich wiederum eine luftdichte Innenschicht 15 an. Der Seitenbereich umfasst wiederum den Seitenstreifen 16 sowie das Kernprofil 17, mit dem der Reifen in Richtung Felgen geführt wird. Zum festen Sitzen auf der Felge umfasst der Reifen einen Stahlkern 18 sowie eine Wulstverstärkung 19. Der optische Faserring 20 ist mäandierend im Reifen angeordnet. Er kann grundsätzlich unterhalb der oben angeführten Schichten verlaufen oder in diese eingebettet sein, sodass er gegen mechanische Einwirkungen von außen geschützt ist, dennoch aber bei Deformationen des Reifens sich entsprechend mit dem Reifen mitbewegt und ausgelenkt wird.

Figur 3 zeigt einen Ausschnitt eines optischen Faserrings P in Gestalt einer mäanderförmigen Kurve. Der Faserring P ist im Wesentlichen locker beziehungsweise beweglich am eigentlichen Reifen gelagert, wobei nur an den Positionen Q1, Q2, Q3 usw. die optische Faser mit dem Stahlbandgürtel in der Karkasse des Reifens fix verbunden wird. Auf dieser Weise wird ermöglicht, dass die optische Faser über ausreichend Spiel verfügt, um bei Verformung des Reifens in hinreichendem Maße der Deformation folgen zu können. Die optische Faser verliert aber auch ihre grundsätzliche Anordnung nicht und liefert somit konstante Ergebnisse.

Figur 4 zeigt noch einmal schematische Darstellungen der Positionierung des optischen Faserrings P im Inneren eines gummibereiften Rades 10. Die optische Faser P ist nur an den Positionen Q1, Q2, Q3 usw. mit dem Stahlbandgürtel in der Karkasse des Reifens fix verbunden. Diese Positionen Q1, Q2, Q3 usw. teilen die Faser in einzelne Segmente auf. Insbesondere ist auch dargestellt, wie der Faserring P innerhalb des eigentlichen Reifens positioniert ist.

Figur 5 wiederum zeigt ein Schema einer Fahrzeug-internen Signalerfassung, welche wiederum breitbandig erfolgen kann. Es werden hierfür Multimodefasern eingesetzt. Figur 5 wiederum zeigt im Zentrum eine Baueinheit aus Lichtquelle und Detektor 30. Von dieser gehen, für alle vier Reifen jeweils zwei Lichtleiter 31 und 32 aus, wobei über einen der Lichtleiter das Licht in Richtung des Reifens geführt und mit dem anderen Lichtleiter 32 das Licht zurück zum Detektor geführt werden kann. Die Verbindung zu den jeweiligen Reifen führt über einen Rotary-Joint 33 und schließlich in die Faserschleife 34 über einen sogenannten 3dB-Koppler. Die Baueinheit 30, welche Lichtquelle und Detektor umfasst, kann ihre Messdaten unmittelbar an eine Kontrolleinheit für die Reifen 35 weiterleiten.

Figur 6 wiederum zeigt einen ähnlichen Aufbau, wie in Figur 5 dargestellt ist, allerdings ist eine integrierte Sende- und Empfangseinheit 33' vorgesehen, die innerhalb der Räder angeordnet ist. Es ist gemäß diesem Ausführungsbeispiel somit auch möglich, neben der optischen Faser auch sonstige Baueinheiten, wie z.B. die Sende- und Empfangseinheit in den Reifen zu integrieren. Die Datenübertragung (etwa an eine Elektronikeinheit zur Auswertung im Auto) kann vom rotierenden Reifen aus auch vorteilhaft über eine drahtlose Verbindung erfolgen.

Figur 7 zeigt eine Skizze eines sich im Gegenuhrzeigersinn mit Winkelgeschwindigkeit $\Omega$ drehen und angetrieben gummibereiften Rades. Die unterschiedlichen Verschiebungen proportional zur Verweildauer im Latsch von Position der Fasersegmente Q1, Q2 und Q3, gegenüber deren Gleichgewichtsposition nach Eintritt in die Reifenaufstandsfläche ist ebenfalls in Figur 7 dargestellt. In dem dargestellten Fall besitzt der Latsch des rollenden Rades einen Haftbereich, der sich über die gesamte Länge L des Latsches erstreckt. Beim Auslaufen aus der Reifenaufstandsfläche ist der Dehnungsvorgang für das Fasersegment an der Position Q3 beendet. Danach schnappt Q3 sehr schnell in seine Gleichgewichtsposition auf der Innenschicht des Reifens zurück. Nach einer Radumdrehung beginnt der Vorgang beim Eintritt in den Haftbereich des Latschs erneut.

Bezugszeichenliste:

| | |
|---|---|
| 1 | Lichtquelle |
| 2 | Zirkulator |
| 3 | Photodetektor |
| 4 | faseroptische Drehkupplung |
| 5 | nichtreziproker Ausgang |
| 6 | faseroptischer 2x2 Koppler |
| 7 | Faserring mit N-Windungen |
| $\Omega$ | Winkelgeschwindigkeit |
| 10 | Reifen |
| 11 | Laufstreifen |
| 12 | Spulbandage |
| 13 | Stahlbandgürtel |
| 14 | Textilcord |
| 15 | luftdichte Innenschicht |
| 16 | Seitenstreifen |
| 17 | Kernprofil |
| 18 | Stahlkern |
| 19 | Wulst |
| 20 | optischer Faserring |

| | |
|---|---|
| L | Latsch |
| P | optischer Faserring |
| Q1 | Fixposition |
| Q2 | Fixposition |
| Q3 | Fixposition |
| S | Sensorvorrichtung |
| D | Detektionsvorrichtung |

| | |
|---|---|
| 30 | Lichtquelle und Detektor |
| 31 | optische Fasern |
| 32 | optische Fasern |
| 33 | Rotary Joint |
| 33' | Sende- und Empfangseinheit |
| 34 | Faserschleife mit 3dB-Koppler |
| 35 | Reifen-Kontrolleinheit |

**Patentansprüche**

1. Sensorvorrichtung (S) zur Erfassung von mechanischen Schwingungen oder sonstigen mechanischen Einwirkungen auf ein Untersuchungsobjekt (10), nämlich ein Bauteil eines Fahrzeugs, nämlich einen Reifen, wobei die Sensorvorrichtung (S) ein faseroptisches Interferometer umfasst, wobei die Sensorvorrichtung (S) als intrinsischer Sensor ausgebildet ist und wobei die Sensorvorrichtung am Fahrzeugreifen (10) anbringbar oder im Fahrzeugreifen einbettbar ist, **dadurch gekennzeichnet, dass** das faseroptische Interferometer als Faserkreisel ausgebildet ist, nämlich als Interferometer nach dem Sagnac-Prinzip wobei das faseroptische Interferometer wenigstens eine optische Faser (7) umfasst, die so angeordnet ist, dass sie eine Fläche umgibt, um das sich ändernde Interferenzsignal zu detektieren, das dadurch entsteht, dass beim Abrollen des belasteten Reifens zeitliche Signaländerungen durch die sich zeitlich ändernde geometrische Anordnung der Faser und die dadurch sich ändernde optische Weglänge der Lichtsignale auftreten.

2. Sensorvorrichtung (S) nach Anspruch 1, **dadurch gekennzeichnet, dass** das faseroptische Interferometer als Faserring-Resonator ausgelegt ist.

3. Sensorvorrichtung (S) nach einem der vorgenannten Ansprüche, **dadurch gekennzeichnet, dass** die wenigstens eine optische Faser die Fläche mit wenigstens zwei Schleifen, umgibt, wobei das faseroptische Interferometer als Ringinterferometer (7, P) ausgebildet ist.

4. Sensorvorrichtung (S) nach einem der vorgenannten Ansprüche, **dadurch gekennzeichnet, dass** die wenigstens eine optische Faser (7) so an oder im Fahrzeugreifen (10) anordenbar ist, dass die zu erfassenden mechanischen Schwingungen oder Einwirkungen eine Änderung der vom Licht zu durchlaufenden Weglänge in der wenigstens einen Faser hervorrufen, wobei die wenigstens eine optische Faser (7) so im Fahrzeugreifen (10) anordenbar ist, dass wenigstens eine der Bewegungsrichtungen, in der sich das Untersuchungsobjekt bewegt oder voraussichtlich bewegt, in oder parallel zur Ebene liegt, in der die von der wenigstens einen optischen Faser umgebene Fläche liegt.

5. Sensorvorrichtung (S) nach einem der vorgenannten Ansprüche, **dadurch gekennzeichnet, dass** die optische Faser (7, P) im Fahrzeugreifen (10) mit mäandrierendem Verlauf anordenbar ist, wobei die mäandrierenden Auslenkungen senkrecht zur Ebene liegen, in der die von der wenigstens einen optischen Faser umgebene Fläche liegt.

6. Sensorvorrichtung (S) nach einem der vorgenannten Ansprüche, **dadurch gekennzeichnet, dass** die optische Faser im oder am Fahrzeugreifen an wenigstens einer diskreten Stelle (Q1, Q2, Q3) befestigbar ist.

7. Sensorvorrichtung (S) nach einem der vorgenannten Ansprüche, **dadurch gekennzeichnet, dass** wenigstens eine Lichtquelle vorgesehen ist, die so ausgebildet ist, dass wenigstens zwei von der wenigstens einen Lichtquelle ausgesandte Lichtsignale in entgegengesetzter Richtung durch die optische Faser propagieren, sodass die Drehung des Reifens und/oder die Relativgeschwindigkeiten einzelner Abschnitte des Interferometers eine Veränderung der Laufzeiten der Lichtsignale bewirken.

8. Sensorvorrichtung (S) nach einem der vorgenannten Ansprüche, **dadurch gekennzeichnet, dass** wenigstens eine der wenigstens einen optischen Faser (7, P) als dotierte Glasfaser zur Bildung eines Faserlasers ausgebildet ist.

9. Detektionsvorrichtung (D) zur Detektion von mechanischen Schwingungen oder sonstigen mechanischen Einwirkungen auf ein Untersuchungsobjekt (10), nämlich ein Bauteil eines Fahrzeugs, nämlich einen Reifen, **dadurch gekennzeichnet, dass** eine Sensorvorrichtung (S) nach einem der vorgenannten Ansprüche vorgesehen ist.

10. Detektionsvorrichtung (D) nach Anspruch 9, **dadurch gekennzeichnet, dass** eine Kopplungsvorrichtung (4, 33) zur Ein- und/oder Auskopplung von elektromagnetischen Wellen, nämlich von Licht, vorgesehen ist, um Licht in die wenigstens eine optische Faser (7) der Sensorvorrichtung (S) ein- und/oder auszukoppeln.

11. Detektionsvorrichtung (D) nach einem der Ansprüche 9 oder 10, **dadurch gekennzeichnet, dass** wenigstens eines der folgenden Bauteile vorgesehen ist:

- eine Lichtquelle (1), nämlich ein Laser zur Erzeugung des Detektionslichts und/oder eine Lichtquelle in Form einer Superlumineszenz-Diode,
- einen Polarisator zur Polarisation des Detektionslichts,
- eine Kopplungsvorrichtung zur Ein- und/oder Auskopplung von Licht,
- einen Phasenmodulator zur Modulation der Phase des Detektionslichts,
- ein optischer Detektor zur Detektion von Licht.

12. Untersuchungsobjekt (10), nämlich Reifen eines Fahrzeugs, **dadurch gekennzeichnet, dass** eine Sensorvorrichtung (S) nach einem der Ansprüche 1-8 oder eine Detektionsvorrichtung (D) nach einem der Ansprüche 9-11 vorgesehen ist.

13. Fahrzeugreifen (10) nach Anspruch 12, **dadurch gekennzeichnet, dass** der Fahrzeugreifen dazu ausgebildet ist, im Betrieb eine Rotationsbewegung um eine Drehachse durchzuführen, und die wenigstens eine optische Faser wenigstens teilweise in einer Rotationsebene senkrecht zur Drehachse angeordnet ist.

14. Fahrzeugreifen nach einem der Ansprüche 12 oder 13, **dadurch gekennzeichnet, dass** der Fahrzeugreifen dazu ausgebildet ist, im Betrieb eine Rotationsbewegung um eine Drehachse durchzuführen, und die wenigstens eine optische Faser (7, P) so angeordnet ist, dass die von der wenigstens einen optischen Faser umgebene Fläche von der Drehachse durchstoßen wird, wobei der Fahrzeugreifen eine Lauffläche (11) umfasst, um damit beim Fahren mit der Straße in Kontakt zu treten, wobei die wenigstens eine optische Faser parallel zur Lauffläche, angeordnet ist.

**15.** Verfahren zur Erfassung von mechanischen Schwingungen oder sonstigen mechanischen Einwirkungen auf ein Untersuchungsobjekt (10), nämlich ein Bauteil eines Fahrzeugs, nämlich einen Reifen, **dadurch gekennzeichnet, dass** eine Sensorvorrichtung (S) nach einem der Ansprüche 1-8 oder eine Detektionsvorrichtung (D) nach einem der Ansprüche 9-11 oder ein Untersuchungsobjekt (10), nämlich ein Reifen eines Fahrzeugs nach einem der Ansprüche 12-14 verwendet wird, um wenigstens eine der folgenden Messungen vorzunehmen:

- zur Messung von fahrdynamischen radindividuellen Parametern wie Raddrehzahl, Beschleunigungen bei der Drehung des Rades Längs- und/oder Querschlupf, auf den Reifen einwirkende mechanische Stöße oder Schwingungen oder ein fahrbahnerregtes Vibrationsspektrum,
- Bestimmung der Abnutzungen des Reifens,
- Bestimmung des Latsches oder der Reifenaufstandsfläche, welche einen kraftschlüssigen Kontakt zwischen gummibereiften Rädern und der Fahrbahn aufweist,
- Bestimmung des Schlupfes,
- Bestimmung von durch Kurvenfahrten bedingte, für das ESP relevante Daten oder Orientierungen der Felge oder Unwuchten des Reifens,
- Bestimmung der Temperatur und/oder des Drucks im Reifen,
- Bestimmung der Haftverhältnisse zwischen gummibereiften Rädern und Fahrbahn,
- Bestimmung des Verhältnisses aus Fläche der Gleitzone und Fläche der Haftzone beim rollenden Reifen.

## Claims

**1.** A sensor device (S) for sensing mechanical vibrations or other mechanical effects on a test object (10), namely a component of a vehicle, namely a tire, wherein the sensor device (S) comprises a fibre-optic interferometer, wherein the sensor device (S) is designed as an intrinsic sensor, and wherein the sensor device is attachable to the vehicle tire (10) or can be embedded into the vehicle tire,
**characterised in that** the fibre-optic interferometer is designed as a fibre-optic gyroscope, namely as an interferometer according to the Sagnac principle, wherein the fibre-optic interferometer comprises at least one optical fibre (7), which is arranged such that it surrounds an area in order to detect the changing interference signal that thereby results in temporal signal changes arising due to the temporally changing geometric arrangement of the fibres and the thereby changing optical path length of the light signal during the rolling motion of the loaded tire.

**2.** The sensor device (S) according to claim 1, **characterised in that** the fibre-optic interferometer is designed as a fibre ring resonator.

**3.** The sensor device (S) according to one of the preceding claims, **characterised in that** the at least one optical fibre surrounds the surface with at least two loops, wherein the fibre-optic interferometer is designed as a ring interferometer (7, P).

**4.** The sensor device (S) according to one of the preceding claims, **characterised in that** the at least one optical fibre (7) can be arranged on or in the vehicle tires (10) in such a way that the mechanical vibrations or effects being sensed trigger a change in the path length which has to be passed through by the light in the at least one fibre, wherein the at least one optical fibre (7) can be arranged such in the vehicle tire (10) that at least one of the directions of movement, in which the test object moves or is expected to move, is in or parallel to the plane in which the surface surrounded by the at least one optical fibre is located.

**5.** The sensor device (S) according to one of the preceding claims, **characterised in that** the optical fibre (7, P) can be arranged in the vehicle tire (10) with a meandering course, wherein the meandering deflections are perpendicular to the plane in which the surface surrounded by the at least one optical fibre is located.

**6.** The sensor device (S) according to one of the preceding claims, **characterised in that** the optical fibre can be fixed in or on the vehicle tire at at least one discrete position (Q1, Q2, Q3).

**7.** The sensor device (S) according to one of the preceding claims, **characterised in that** at least one light signal is provided, which is designed such that at least two light signals emitted by the at least one light source propagate in the opposite direction through the optical fibre, such that the rotation of the tire and/or the relative speeds of individual sections of the interferometer effect a change in the run times of the light signals.

8. The sensor device (S) according to one of the preceding claims, **characterised in that** at least one of the at least one optical fibre (7, P) is designed as a doped glass fibre to form a fibre laser.

9. A detection device (D) for detecting mechanical vibrations or other mechanical effects on a test object (10), namely a component of a vehicle, namely a tire, **characterised in that** a sensor device (S) is provided according to one of the preceding claims.

10. The detection device (D) according to claim 9, **characterised in that** a coupling device (4, 33) is provided for coupling and/or decoupling of electromagnetic waves, namely of light, in order to couple and/or decouple light in the at least one optical fibre (7) of the sensor device (S).

11. The detection device (D) according to one of claims 9 or 10, **characterised in that** at least one of the following components is provided:

   - a light source (1), namely a laser for producing a detection light and/or a light source in form of a superluminescence diode
   - a polariser for polarization of the detection light,
   - a coupling device for coupling and/or decoupling light,
   - a phase modulator to modulate the phase of the detection light,
   - an optical detector for detecting light.

12. A test object (10), namely a tire of a vehicle, **characterised in that** a sensor device (S) according to one of claims 1-8 or a detection device (D) according to one of claims 9-11 is provided.

13. A vehicle tire (10) according to claim 12, **characterised in that** the vehicle tire is designed such that a rotary motion about a rotary axis is executed during operation, and the at least one optical fibre is arranged at least partially in a rotational plane perpendicular to the rotary axis.

14. The vehicle tire according to one of claims 12 or 13, **characterised in that** the vehicle tire is designed such that a rotary motion about a rotary axis is executed during operation, and the at least one optical fibre (7, P) is arranged such that the surface surrounded by the at least one optical fibre is penetrated by the rotary axis, wherein the vehicle tire comprises a tread (11) in order to make contact with the road when driving, wherein the at least one optical fibre is arranged parallel to the tread.

15. A method for recording mechanical vibrations or other mechanical effects on a test object (10), namely a component of a vehicle, namely a tire, **characterised in that** a sensor device (S) according to one of claims 1-8 or a detection device (D) according to one of claims 9-11 or a test object (10), namely a tire of a vehicle according to one of claims 12-14 is used to perform at least one of the following measurements:

   - for the measurement of dynamic parameters individual to the specific wheel, such as wheel rotational speed, accelerations during rotation of the wheel, longitudinal and/or transverse slip, mechanical impacts or vibrations influencing the tires or a road-stimulated vibrational spectrum,
   - determination of wearing of the tire,
   - determination of the shuffle or tire contact area, which has a force-locked contact between rubber-tired wheels and the road,
   - determination of the wheel spin,
   - determination of data dependent on driving around curves and relevant for ESP or orientations of the wheel rim or imbalances of the tire,
   - determination of the temperature and/or the pressure in the tire,
   - determination of the adhesion conditions between rubber-tired wheels and the road,
   - determination of the ratio from the surface of the sliding zone and the surface of the adhesive zone when tires are in motion.

**Revendications**

1. Dispositif de détection (S) servant à détecter des vibrations mécaniques ou d'autres effets mécaniques sur un objet à tester (10), à savoir un composant de véhicule, à savoir un pneu, le dispositif de détection (S) comprenant un interféromètre à fibre optique, le dispositif de détection (S) étant conçu sous la forme d'un capteur intrinsèque et le dispositif de détection pouvant être monté sur le pneu (10) de véhicule ou pouvant être incorporé dans le pneu de véhicule,

**caractérisé en ce que** l'interféromètre à fibre optique est conçu sous la forme d'un gyromètre à fibre optique, à savoir sous la forme d'un interféromètre de Sagnac, l'interféromètre à fibre optique comprenant au moins une fibre optique (7), qui est disposée de telle sorte qu'elle entoure une surface pour détecter le signal d'interférence variable qui se produit par le fait que lors du mouvement du pneu chargé, des modifications temporelles de signal se produisent en raison de la disposition géométrique variant dans le temps de la fibre et de la longueur de trajet optique du signal lumineux ainsi modifié.

2. Dispositif de détection (S) selon la revendication 1, **caractérisé en ce que** l'interféromètre à fibre optique est conçu sous la forme d'un résonateur en anneau fibré.

3. Dispositif de détection (S) selon l'une quelconque des revendications précédentes, **caractérisé en ce que** la au moins une fibre optique entoure la surface à l'aide d'au moins deux boucles, l'interféromètre à fibre optique étant conçu sous la forme d'un interféromètre en anneaux (7, P).

4. Dispositif de détection (S) selon l'une quelconque des revendications précédentes, **caractérisé en ce que** la au moins une fibre optique (7) peut être disposée sur ou dans le pneu (10) de véhicule, de telle sorte que les vibrations ou les effets mécaniques provoquent une modification de la longueur de trajet à parcourir par la lumière dans la au moins une fibre, la au moins une fibre optique (7) pouvant être disposée dans le pneu (10) de véhicule, de telle sorte qu'au moins un des sens de mouvement, dans lequel l'objet à tester se déplace ou se déplace probablement, se situe dans le plan ou parallèlement à ce dernier, dans lequel se trouve la surface entourée par la au moins une fibre optique.

5. Dispositif de détection (S) selon l'une quelconque des revendications précédentes, **caractérisé en ce que** la fibre optique (7, P) peut être disposée dans le pneu (10) de véhicule dont le tracé est sinueux, les déformations sinueuses étant perpendiculaires au plan dans lequel se trouve la surface entourée par la au moins une fibre optique.

6. Dispositif de détection (S) selon l'une quelconque des revendications précédentes, **caractérisé en ce que** la fibre optique peut être fixée dans ou sur le pneu de véhicule en au moins un emplacement discret (Q1, Q2, Q3).

7. Dispositif de détection (S) selon l'une quelconque des revendications précédentes, **caractérisé en ce qu'**il est prévu au moins une source de lumière, qui est conçue de telle sorte qu'au moins deux signaux lumineux émis par la au moins une source de lumière se propagent en sens inverse à travers la fibre optique, de sorte que la rotation du pneu et/ou les vitesses relatives de chacune des sections de l'interféromètre engendrent une modification des retards des signaux lumineux.

8. Dispositif de détection (S) selon l'une quelconque des revendications précédentes, **caractérisé en ce qu'**au moins une parmi la au moins une fibre optique (7, P) est conçue sous la forme d'une fibre de verre dopé destinée à former un laser à fibre.

9. Dispositif de détection (D) servant à détecter des vibrations mécaniques ou d'autres effets mécaniques sur un objet à tester (10), à savoir un composant d'un véhicule, notamment un pneu, **caractérisé en ce qu'**il est prévu un dispositif de détection (S) selon l'une quelconque des revendications précédentes.

10. Dispositif de détection (D) selon la revendication 9, **caractérisé en ce qu'**un dispositif de couplage (4, 33) sert à coupler et découpler des ondes électromagnétiques, à savoir la lumière, pour coupler et/ou découpler la lumière dans la au moins une fibre optique (7) du dispositif de détection (S).

11. Dispositif de détection (D) selon l'une quelconque des revendications 9 ou 10, **caractérisé en ce qu'**il est prévu au moins l'un des composants suivants :

   - une source de lumière (1), à savoir un laser servant à produire de la lumière de détection et/ou une source de lumière en forme d'une diode superluminescente,
   - un polariseur servant à polariser la lumière de détection,
   - un dispositif de couplage servant à coupler et/ou découpler la lumière,
   - un modulateur de phase servant à la modulation de la phase de la lumière de détection,

- un détecteur optique servant à la détection de la lumière.

**12.** Objet à tester (10), à savoir pneu de véhicule, **caractérisé en ce qu'**il est prévu un dispositif de détection (S) selon l'une des revendications 1 à 8 ou dispositif de détection (D) selon l'une des revendications 9 à 11.

**13.** Pneu (10) de véhicule selon la revendication 12, **caractérisé en ce que** le pneu de véhicule est conçu pour effectuer un mouvement de rotation autour d'un axe de rotation lorsqu'il est en fonctionnement, et la au moins une fibre optique est disposée au moins à certains endroits dans un plan de rotation perpendiculaire à l'axe de rotation.

**14.** Pneu de véhicule selon l'une des revendications 12 ou 13, **caractérisé en ce que** le pneu de véhicule est conçu pour effectuer un mouvement de rotation autour d'un axe de rotation lorsqu'il est en fonctionnement et **en ce que** la au moins une fibre optique (7, P) est disposée de telle sorte que la surface entourée par la au moins une fibre optique soit transpercée par l'axe de rotation, le pneu de véhicule comprenant une bande de roulement (11) qui sert à entrer en contact avec la route lors de la conduite, la au moins une fibre optique étant parallèle à la bande de roulement.

**15.** Procédé de détection de vibrations mécaniques ou d'autres effets mécaniques sur un objet à tester (10), à savoir un composant d'un véhicule, à savoir un pneu, **caractérisé en ce qu'**on utilise un dispositif de détection (S) selon l'une des revendications 1 à 8 ou un dispositif de détection (D) selon l'une des revendications 9 à 11 ou un objet à tester (10), à savoir un pneu de véhicule selon l'une des revendications 12 à 14, pour procéder à au moins l'une des mesures suivantes :

- mesurer des paramètres de dynamique de conduite individuels à chaque roue comme la vitesse de la roue, les accélérations lors de la rotation de la roue, le glissement transversal et/ou longitudinal, les chocs ou les vibrations mécaniques agissant sur les pneus ou un spectre de vibrations provoquées par la route,
- la détermination de l'usure du pneu,
- déterminer l'aire de contact ou la surface de contact du pneu qui présente un contact par adhérence entre les roues équipées de pneus et la route,
- déterminer le glissement,
- déterminer les orientations des jantes ou le balourd du pneu par des données liées à la prise de virages pertinentes pour le correcteur électronique de trajectoire (ESP),
- déterminer la température et/ou de la pression dans le pneu,
- déterminer les rapports d'adhérence entre les roues équipées de pneus et la route,
- déterminer le rapport entre la surface de la zone de glissement et la surface de la zone d'adhérence lorsque le pneu est en mouvement.

*D*

*S*

Fig. 1

Fig. 2

Fig. 3

Fig. 4

Fig. 5

Fig. 6

Fig. 7